# EUROPEAN PATENT APPLICATION

(11) **EP 4 814 573 A1**
(43) Date of publication of application: **30.09.2026**
(21) Application number: 26166736.4
(22) Date of filing: 23.03.2026
(51) Int. Cl.: G02F 1/13357

(54) **BACKLIGHT UNIT FOR DISPLAY DEVICE**

(30) Priority: 26.03.2025 KR 20250038867; 25.06.2025 KR 20250084154
(71) Applicant: LG Electronics Inc., Yeongdeungpo-gu Seoul 07336 (KR)
(72) Inventor: LEE, Uihyung, Seoul (KR); KIM, Minho, Seoul (KR); KIM, Geunhwan, Seoul (KR)
(74) Representative: Vossius & Partner Patentanwälte Rechtsanwälte mbB

(57) **Abstract**

A backlight unit for display device includes: a plurality of light sources arranged in a matrix pattern, each of the light sources including a red light emitting diode (LED), a green light emitting diode, and a blue light emitting diode; a diffuser plate configured to receive light from the light sources; and at least one optical sheet between a display panel and the diffuser plate, wherein a light-emitting area of the red light emitting diode is larger than a light-emitting area of the green light emitting diode and a light-emitting area of the blue light emitting diode, and an arrangement of the red, green, and blue light emitting diodes substantially forms a perimeter of a square in a planar view.

## Description

### CROSS-REFERENCE TO RELATED APPLICATION

This application claims the priority benefit of Korean Patent Application No. 10-2025-0038867, filed on March 26, 2025 and Korean Patent Application No. 10-2025-0084154, filed on June 25, 2025, the disclosure of which is incorporated herein by reference.

### TECHNICAL FIELD

This disclosure relates to a backlight unit for a display device.

### BACKGROUND

As the information society develops, demand for display devices is also increasing in various forms. To meet this demand, various display devices, such as Liquid Crystal Display Device (LCD), Plasma Display Panel (PDP), Electroluminescent Display (ELD), and Vacuum Fluorescent Display (VFD), have been researched and implemented in recent years.

Among these, LCD panels include a TFT substrate and a color substrate that face each other with a liquid crystal layer interposed there-between, and display images by using light provided by a backlight unit.

Recently, as interest in the image quality of display devices has increased, color expression or color reproducibility close to true color has received significant attention, and much research is being conducted on a backlight unit for display device to improve light uniformity and implement natural colors.

### SUMMARY

The disclosure has been made in view of the above problems, and may provide a backlight unit for a display device capable of improving image quality.

The disclosure may further provide a backlight unit for a display device capable of improving color expression.

The disclosure may further provide a backlight unit for a display device capable of improving brightness.

The disclosure may further provide a backlight unit for a display device capable of expanding a viewing angle.

The disclosure may further provide a backlight unit for a display device capable of improving the implementation performance of white light.

The disclosure may further provide a backlight unit for a display device including a red light emitting diode, a green light emitting diode, and a blue light emitting diode.

The disclosure may further provide a backlight unit for a display device capable of improving color separation.

The disclosure may further provide a backlight unit for a display device capable of reducing the size of a light source.

The disclosure may further provide a backlight unit for a display device capable of reducing the operating temperature of a light source.

The disclosure may further provide a backlight unit for a display device capable of reducing manufacturing costs.

In accordance with an aspect of the present disclosure, a backlight unit for display device includes: a plurality of light sources arranged in a matrix pattern, each of the light sources including a red light emitting diode (LED), a green light emitting diode, and a blue light emitting diode; a diffuser plate configured to receive light from the light sources; and at least one optical sheet between a display panel and the diffuser plate, in which a light-emitting area of the red light emitting diode is larger than a light-emitting area of the green light emitting diode and a light-emitting area of the blue light emitting diode, and an arrangement of the red, green, and blue light emitting diodes substantially forms a perimeter of a square in a planar view.

In accordance with another aspect of the present disclosure, a backlight unit for display device includes: a plurality of light sources arranged in a matrix pattern, each of the light sources including a red light emitting diode (LED), a green light emitting diode, and a blue light emitting diode; a diffuser plate configured to receive light from the light sources; and at least one optical sheet between a display panel and the diffuser plate, in which a light-emitting area of the red light emitting diode is larger than a light-emitting area of the green light emitting diode and a light-emitting area of the blue light emitting diode, the light source emits white light, and a current density of the red light emitting diode is less than or equal to current densities of the green and blue light emitting diodes.

In accordance with another aspect of the present disclosure, a backlight unit for display device includes: a plurality of light sources arranged in a matrix pattern, each of the light sources including a red light emitting diode (LED), a green light emitting diode, and a blue light emitting diode; a diffuser plate configured to receive light from the light sources; and at least one optical sheet between a display panel and the diffuser plate, in which a light-emitting area of the red light emitting diode is larger than a light-emitting area of the green light emitting diode and a light-emitting area of the blue light emitting diode, an operating temperature of the light source is less than or equal to about 50 degrees Celsius, a current applied to the red light emitting diode is greater than or equal to about 1.5 times a current applied to the blue light emitting diode, and a current applied to the green light emitting diode is greater than or equal to about 1.3 times a current applied to the blue light emitting diode.

### BRIEF DESCRIPTION OF THE DRAWINGS

The above and other objects, features and advantages of the present disclosure will be more apparent from the following detailed description in conjunction with the accompanying drawings, in which:

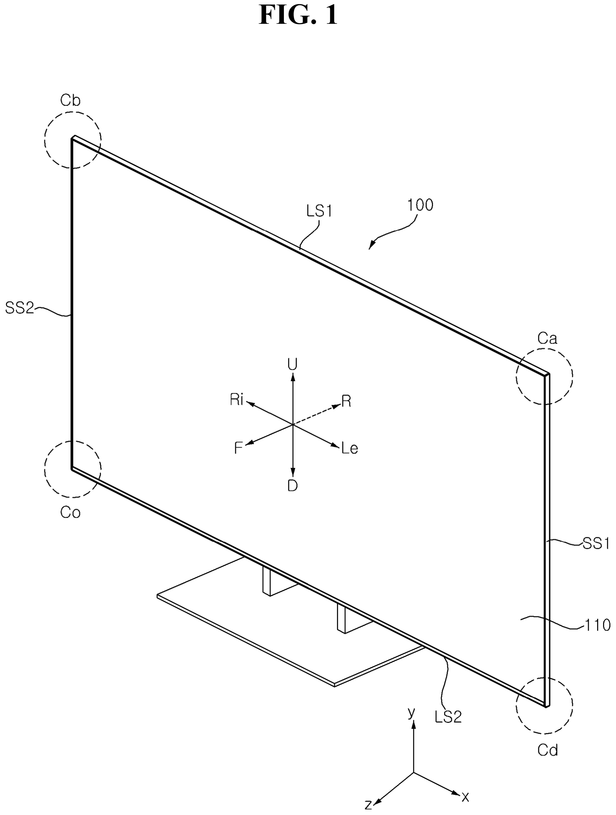

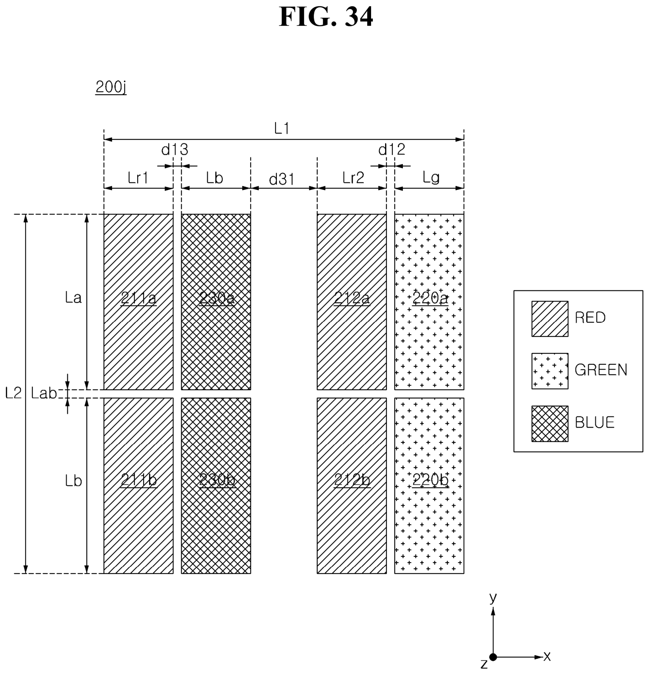

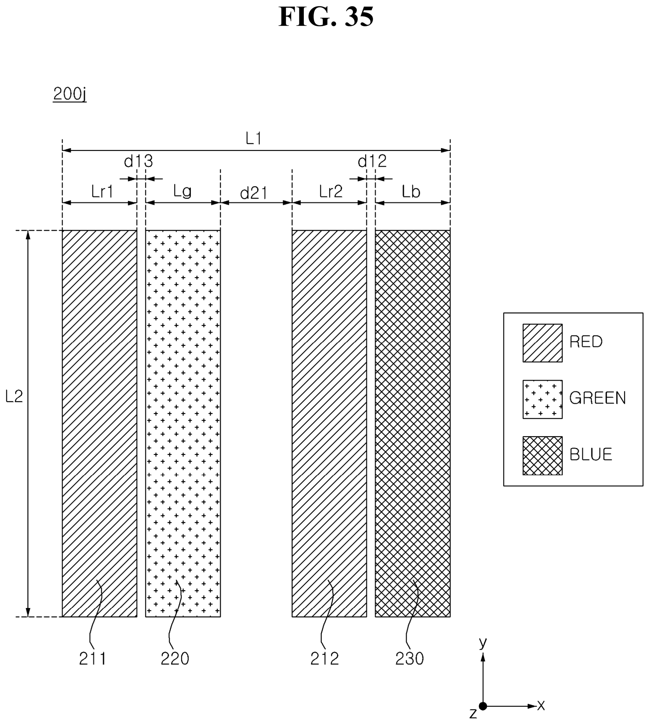

FIGS. 1 to 58 are drawings illustrating examples of a backlight unit for a display device and a display device including the same according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

The directional indications of up U, down D, left Le, right Ri, front F, and rear R shown in the drawings are merely for the convenience of explanation, and the technical concepts disclosed in this specification are not limited thereby.

Referring to FIG. 1, a display device 100 may include a display panel 110. The display panel 110 may display an image.

The display device 100 may include a first long side LS1, a second long side LS2 opposite to the first long side LS1, a first short side SS1 adjacent to the first and second long sides LS1, LS2, and a second short side SS2 opposite to the first short side SS1. Meanwhile, for convenience of explanation, it is illustrated and described that the lengths of the first and second long sides LS1, LS2 are greater than the lengths of the first and second short sides SS1, SS2, but it may also be possible that the lengths of the first and second long sides LS1, LS2 are about equal to the lengths of the first and second short sides SS1, SS2.

The direction parallel to the long sides LS1, LS2 of the display device 100 may be referred to as a left-right direction. The direction parallel to the short sides SS1, SS2 of the display device 100 may be referred to as an up-down direction. The direction perpendicular to the long sides LS1, LS2 and short sides SS1, SS2 of the display device 100 may be referred to as a front-rear direction.

The direction in which the display panel 110 displays an image may be referred to as a forward direction (F, z), and the opposite direction may be referred to as a rearward direction R. The first long side LS1 side may be referred to as an upper side (U, y), and the second long side LS2 side may be referred to as a lower side D. The first short side SS1 side may be referred to as a left side (Le, x), and the second short side SS2 side may be referred to as a right side Ri.

The first long side LS1, the second long side LS2, the first short side SS1, and the second short side SS2 may be referred to as an edge of the display device 100. A point where the first long side LS1, the second long side LS2, the first short side SS1, and the second short side SS2 meet each other may be referred to as a corner.

A point where the first short side SS1 and the first long side LS1 meet may be referred to as a first corner Ca. A point where the first long side LS1 and the second short side SS2 meet may be referred to as a second corner Cb. A point where the second short side SS2 and the second long side LS2 meet may be referred to as a third corner Cc. A point where the second long side LS2 and the first short side SS1 meet may be referred to as a fourth corner Cd.

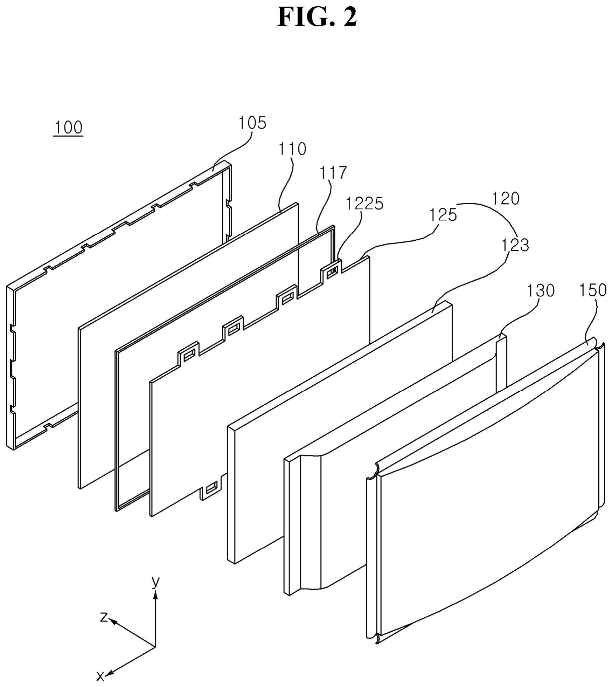

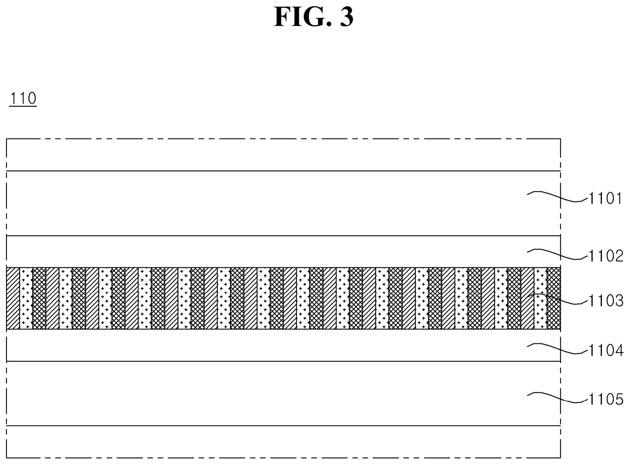

Referring to FIGS. 2 and 3, the display device 100 may include a display panel 110, a front cover 105, a guide panel 117, a backlight unit 120, a frame 130, and a back cover 150.

The display panel 110 may form the front surface of the display device 100 and display images. The display panel 110 may display an image by having a plurality of pixels that output Red, Green, or Blue (RGB) for each pixel in accordance with a timing.

The display panel 110 may have a rectangular shape. The display panel 110 may be provided in various sizes. The size of the display panel 110 may be a diagonal length of a screen measured in inches. For example, the display panel 110 may have a size of about 115 inches, about 100 inches, about 86 inches, or about 75 inches.

The display panel 110 may be divided into an active area where an image is displayed and a de-active area where an image is not displayed.

The display panel 110 may include a front plate 1101 and a rear plate 1105 that face each other with a liquid crystal layer 1103 interposed there-between. The front plate 1101 of the display panel 110 may be referred to as a first polarizing plate 1101, and the rear plate 1105 may be referred to as a second polarizing plate 1105. The display panel 110 may be referred to as an LCD panel.

The front plate 1101 may include a plurality of pixels composed of red, green, and blue subpixels. The front plate 1101 may output light corresponding to the colors of red, green, or blue according to a control signal.

The rear plate 1105 may include switching elements. The rear plate 1105 may switch a pixel electrode. For example, the pixel electrode may change the molecular arrangement of a liquid crystal layer according to an externally input control signal.

The liquid crystal layer 1103 may include liquid crystal molecules. The arrangement of liquid crystal molecules may change in response to a voltage difference generated between the pixel electrode and a common electrode. The liquid crystal layer 1103 may transmit light provided from the backlight unit 120 to the front panel 1101 or block the light.

The front panel 1101 may be attached to the liquid crystal layer 1103 by a first adhesive layer 1102, and the rear plate 1105 may be attached to the liquid crystal layer 1103 by a second adhesive layer 1104.

The front cover 105 may cover at least partial area of the front and side surfaces of the display panel 110. The front cover 105 may be divided into a front cover positioned on the front surface of the display panel 110 and a side cover positioned on the side surface. At least one of the front cover and the side cover may be omitted.

The guide panel 117 may surround the perimeter of the display panel 110 and cover the side surface of the display panel 110. The guide panel 117 may be coupled to the display panel 110 or may support the display panel 110.

The backlight unit 120 may be located at the rear of the display panel 110. The backlight unit 120 may include light sources. The backlight unit 120 may be coupled to the frame 130 at the front of the frame 130. The backlight unit 120 may be driven by a full driving method or a partial driving method such as local dimming or impulsive. The backlight unit 120 may include an optical sheet 125 and an optical layer 123.

The optical sheet 125 may evenly transmit light from a light source to the display panel 110. The optical sheet 125 may be composed of multiple layers. For example, the optical sheet 125 may include a prism layer, a diffusion layer, or the like. For example, the optical sheet 125 may include a double brightness enhance film (DBEF). Meanwhile, the coupling portion 125e of the optical sheet 125 may be coupled to the front cover 105, the frame 130, or the back cover 150.

The frame 130 may be located at the rear of the backlight unit 120 and may support components of the display device 100. For example, components such as the backlight unit 120, a printed circuit board (PCB) on which a plurality of electronic components are positioned, and the like may be coupled to the frame 130. The frame 130 may be referred to as a cover bottom 130.

The back cover 150 may cover the rear of the frame 130. The back cover 150 may be coupled to the frame 130 and/or the front cover 105.

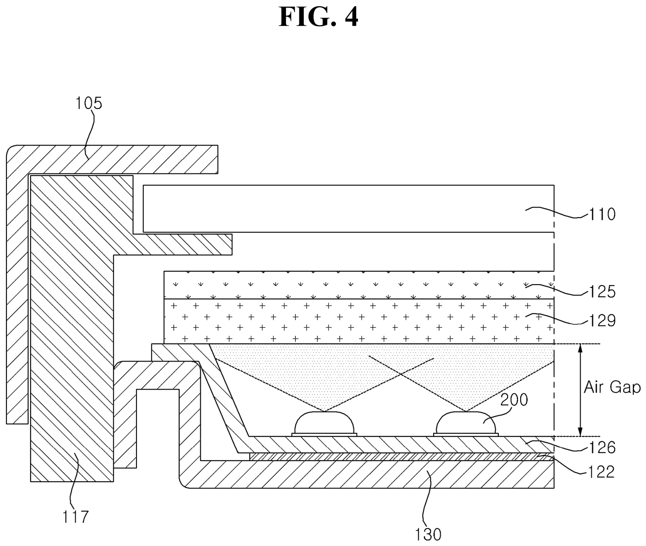

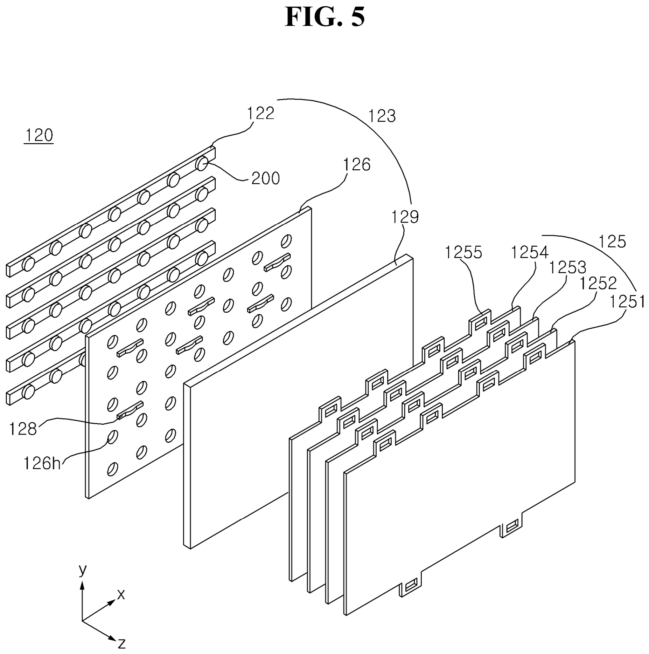

Referring to FIGS. 4 and 5, the backlight unit 120 may include an optical layer 123 and an optical sheet 125. The optical layer 123 may include a substrate 122, at least one light source 200, a reflective sheet 126, and a diffuser plate 129.

The substrate 122 may be coupled to the front surface of the frame 130. The substrate 122 may have a plate shape, or may be composed of a plurality of straps spaced apart from each other in a vertical direction. Alternatively, the substrate 122 may have a fork shape including a first plate extending long and a plurality of second plates intersecting with the first plate. The substrate 122 may be composed of at least one of polyethylene terephthalate (PET), glass, polycarbonate (PC), and silicon. The substrate 122 may be a printed circuit board (PCB).

At least one light source 200 may be mounted on the substrate 122. A plurality of light sources 200 may be spaced apart from each other on the substrate 122. An electrode pattern for connecting the adapter and the light sources 200 may be formed on the substrate 122. For example, a carbon nanotube electrode pattern for connecting the light assembly 200 and the adapter may be formed on the substrate 122.

For example, the light source 200 may be a light emitting diode (LED) chip or a light emitting diode package including at least one light emitting diode chip. The light source 200 may be composed of a colored light emitting diode that emits at least one color among red, green, and blue colors. For example, the light source 200 may include a red light emitting diode, a green light emitting diode, and a blue light emitting diode that emit red, green, and blue colors.

Accordingly, the light source 200 may implement white light by combining red light, green light, and blue light. For example, the light source 200 may implement white light corresponding to color coordinates (approximately 0.281, approximately 0.288) and/or a color temperature of about 10,000 K by combining red light, green light, and blue light.

The light sources 200 may be arranged in a matrix pattern. For example, the light sources 200 may be arranged in a long-side direction and a short-side direction of the substrate 122. The row direction of the matrix pattern may be parallel to the long-side direction of the substrate 122. The column direction of the matrix pattern may be parallel to the short-side direction of the substrate 122. For example, the column direction of the matrix pattern may be parallel to the up-down direction, and the row direction of the matrix pattern may be parallel to the left-right direction.

However, it is not limited thereto, and conversely, the row and column directions of the matrix pattern may be parallel to the short-side and long-side directions of the substrate 122, respectively.

The reflective sheet 126 may be located in front of the substrate 122. The reflective sheet 126 may have holes 126h in which the light sources 200 are positioned. The reflective sheet 126 may include at least one of metal and metal oxide which are a reflective material. For example, the reflective sheet 126 may include a metal and/or metal oxide having a high reflectivity, such as at least one of aluminum Al, silver Ag, gold Au, and titanium dioxide TiO2. The reflective sheet 126 may reflect the light emitted from the light source 200 or the light reflected from the diffuser plate 129 in a forward direction.

The diffuser plate 129 may be located in front of the reflective sheet 126. The diffuser plate 129 may receive the light from the light source 200. The diffuser plate 129 may diffuse the light from the light source 200. The supporter 128 may be located between the reflective sheet 126 and the diffuser plate 129, and may support the rear surface of the diffuser plate 129. An air gap may be formed between the reflective sheet 126 and the diffuser plate 129, and the light from the light assembly 200 may be widely diffused by the air gap. The diffuser plate 129 may be referred to as an optical plate 129.

The optical sheet 125 may be located in front of the diffuser plate 129. The optical sheet 125 may be provided between the diffuser plate 129 and the display panel 110. The rear surface of the optical sheet 125 may be in close contact with the diffuser plate 129, and the front surface of the optical sheet 125 may be in close contact with or adjacent to the rear surface of the display panel 110. The optical sheet 125 may include at least one layer.

For example, the optical sheet 125 may include multiple layers having different functions. A first optical layer 1251 may be a diffusion layer, and a second optical layer 1252 and a third optical layer 1253 may be prism layers. The prism layer may collect light emitted from the diffuser plate 129 and provide it to the display panel 110. The diffusion layer may prevent the light emitted from the diffuser plate 129 from being partially concentrated, thereby ensuring a more uniform light distribution. The number and/or positions of the prism layer and the diffusion layers may be varied.

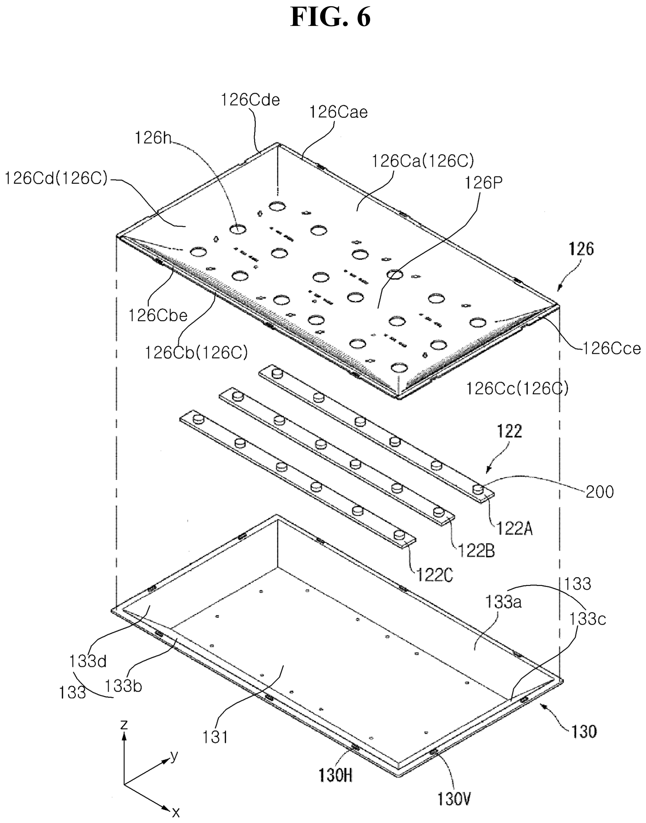

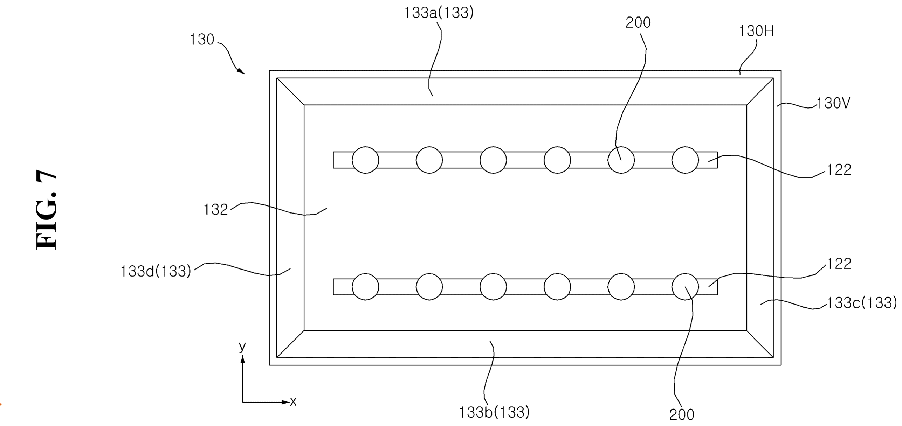

Referring to FIGS. 6 and 7, the substrate 122 may include a plurality of bars spaced apart from each other. For example, the substrate 122 may include three bars 122A, 122B, 122C (see FIG. 4). For another example, the substrate 122 may include two bars 122A, 122B (see FIG. 5). For yet another example, the substrate 122 may include at least one plate-shaped substrate or at least one fork-shaped substrate.

The frame 130 may have an overall rectangular tray shape. The frame 130 may include a central portion 131, a side portion 133, and a seating portion 130H, 130V.

The central portion 131 may be a rectangular plate, and the substrate 122 may be coupled to the front surface of the central portion 131. The central portion 131 may be referred to as a base 131.

The side portion 133 may extend obliquely in a forward direction from an edge of the central portion 131. The side portion 133 may be referred to as a chamfer portion 133. A first side portion 133a may extend obliquely in a forward direction from the upper side of the central portion 131. The angle between the first side portion 133a and the front surface of the central portion 131 may be an obtuse angle. A second side portion 133b may extend obliquely in a forward direction from the lower side of the central portion 131. The angle between the second side portion 133b and the front surface of the central portion 131 may be an obtuse angle. A third side portion 133c may extend obliquely in a forward direction from the left side of the central portion 131. The angle between the third side portion 133c and the front surface of the central portion 131 may be an obtuse angle. A fourth side portion 133d may extend obliquely in a forward direction from the right side of the central portion 131. The first to fourth side portions 133a, 133b, 133c, 133d may be connected to each other.

The seating portion 130H, 130V may extend from the distal end of the side portion 133 in a direction parallel to the central portion 131. The vertical portion 130V may extend in a vertical direction (i.e., up-down direction), and form the left and right sides of the frame 130. The horizontal portion 130H may extend in a horizontal direction (i.e., left-right direction), and may form the upper and lower sides of the frame 130.

The reflective sheet 126 may cover the substrate 122, and the light sources 200 on the substrate 122 may be located in the holes 126h of the reflective sheet 126. The reflective sheet 126 may have a shape corresponding to the frame 130. The reflective sheet 126 may include a central portion 126P and a side portion 126C. The central portion 126P may have a rectangular sheet shape, and the side portion 126C may be bent inclined in a forward direction from an edge of the central portion 126P. The central portion 126P may have a shape corresponding to the central portion 131, and the substrate 122 may be covered by the central portion 126P. The central portion 126P may be referred to as a base 126P, and the side portion 126C may be referred to as a chamfer portion 126C.

A first side portion 126Ca may be inclined and bent in a forward direction from the upper side of the central portion 126P. The first side portion 126Ca may face the first side portion 133a, and a portion 126Cae of the first side portion 126Ca may be bent to be seated on a horizontal portion 130H extending from the first side portion 133a. A second side portion 126Cb may be inclined in a forward direction from the lower side of the central portion 126P. The second side portion 126Cb may face the second side portion 133b, and a portion 126Cbe of the second side portion 126Cb may be bent to be seated on a horizontal portion 130H extended from the second side portion 133b. A third side portion 126Cc may be inclined in a forward direction from the left side of the central portion 126P. The third side portion 126Cc may face the third side portion 133c, and a portion 126Cce of the third side portion 126Cc may be bent to be seated on a vertical portion 130V extended from the third side portion 133c. A fourth side portion 126Cd may be bent in a forward direction from the right side of the central portion 126P. The fourth side portion 126Cd may face the fourth side portion 133d, and a portion 126Cde of the fourth side portion 126Cd may be bent to be seated on a vertical portion 130V extended from the fourth side portion 133d.

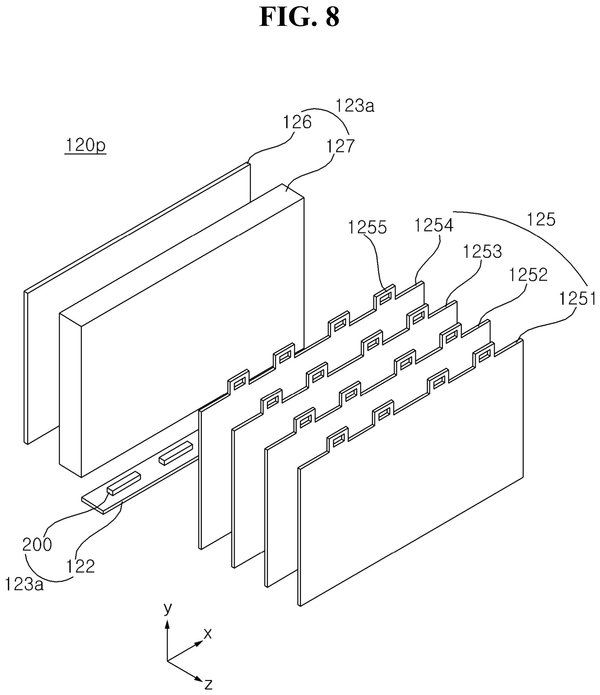

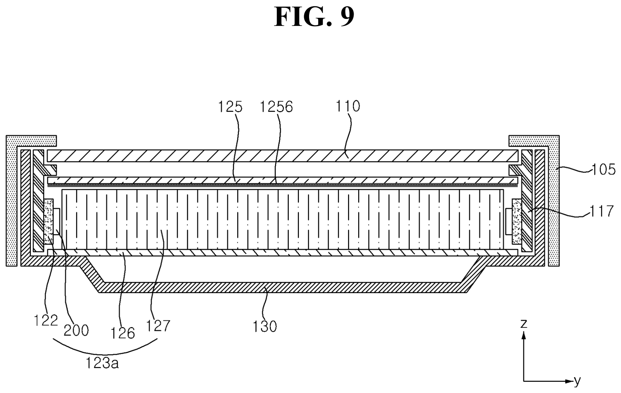

Referring to FIGS. 8 and 9, the backlight unit 120p may include an optical layer 123a and an optical sheet 125. The optical layer 123a may be located between the frame 130 and the display panel 110. The optical layer 123a may be supported by the frame 130. The optical layer 123a may include a substrate 122, at least one light source 200, a reflective sheet 126, and a light guide plate 127.

The light guide plate 127 may be located between the frame 130 and the optical sheet 125, and may be supported by the frame 130. The light guide plate 127 may be referred to as an optical plate 127.

The substrate 122 may be adjacent to the perimeter of the light guide plate 127, and may be coupled to one side of the guide panel 117. For example, the substrate 122 may be adjacent to the lower side of the light guide plate 127. The substrate 122 may be composed of at least one of polyethylene terephthalate (PET), glass, polycarbonate PC, and silicon. The substrate 122 may be a printed circuit board (PCB).

At least one light source 200 may be mounted on the substrate 122. A plurality of light sources 200 may be spaced apart from each other on the substrate 122. An electrode pattern for connecting an adapter and the light source 200 may be formed on the substrate 122. For example, a carbon nanotube electrode pattern for connecting the light source 200 and the adapter may be formed on the substrate 122.

For example, the light source 200 may be a light emitting diode LED chip or a light emitting diode package including at least one light emitting diode chip. The light source 200 may be composed of a colored light emitting diode that emits at least one color among red, green, and blue colors.

For example, the light source 200 may include a red light emitting diode, a green light emitting diode, and a blue light emitting diode that emit red, green, and blue colors.

Accordingly, the light source 200 may implement white light by combining red, green, and blue lights. For example, the light source 200 may implement white light corresponding to color coordinate (approximately 0.281, approximately 0.288) and/or a color temperature of about 10,000 K by combining red, green, and blue light.

The reflective sheet 126 may be located between the frame 130 and the light guide plate 127, and supported by the frame 130. The reflective sheet 126 may include at least one reflective material, such as a metal or metal oxide. For example, the reflective sheet 126 may include a metal and/or metal oxide with high reflectivity, such as at least one of aluminum (Al), silver (Ag), gold (Au), and titanium dioxide (TiO2).

Accordingly, the light source 200 may provide light to the edge of the light guide plate 127. Light flowing into the light guide plate 127 may be directed forward by the light guide plate 127 and the reflective sheet 126.

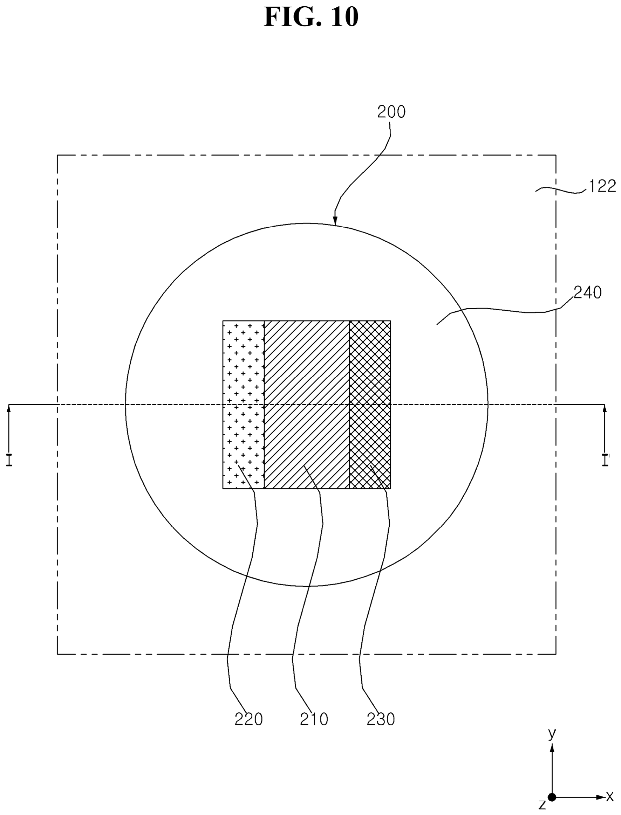

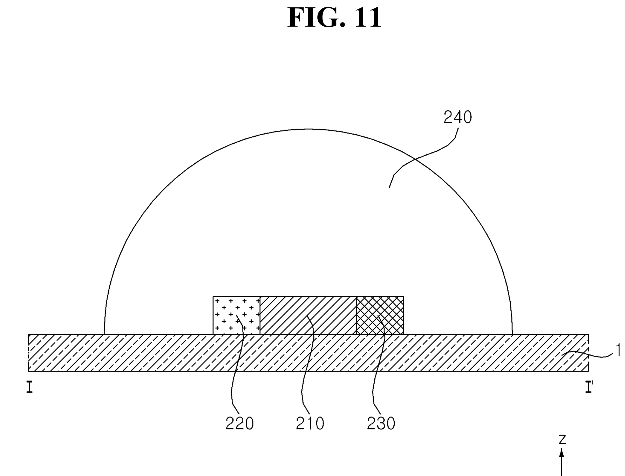

Referring to FIGS. 10 and 11, the light source 200 may include a plurality of light emitting diodes configured to emit light of different colors. The light source 200 may include at least one of a red light emitting diode 210, a green light emitting diode 220, or a blue light emitting diode 230. For example, the light source 200 may include a red light emitting diode 210, a green light emitting diode 220, and a blue light emitting diode 230. The light source 200 may implement white light through a combination of red light, green light, and blue light emitted from the red, green, and blue light emitting diodes 210, 220, 230. For example, the light source 200 may be referred to as an RGB light source 200 or RGB light emitting diode(s).

Accordingly, the light source 200 may emit white light. For example, the light source 200 may implement white light corresponding to color coordinate (approximately 0.281, approximately 0.288) and/or a color temperature of about 10000K.

For convenience of explanation, FIGS. 10 and 11 illustrate each of the red, green, and blue light emitting diodes 210, 220, 230 of the light source 200 as a single unit. However, in one embodiment, each of the red, green, and blue light emitting diodes 210, 220, 230 of the light source 200 may be provided singly or in multiple units depending on the design.

Hereinafter, the red, green, and blue light emitting diodes 210, 220, 230 may be referred to as light emitting diodes, and one of the red, green, and blue light emitting diodes 210, 220, 230 may be referred to as a light emitting diode.

A backlight unit 120 for a display device may further include a substrate 122 on which a light source 200 is mounted. The light emitting diodes LEDs may be directly mounted on the substrate 122. For example, the light source 200 may be formed as a Chip On Board (COB) type.

The substrate 122 may include an electrode pattern (not shown) configured to supply power to the light emitting diodes 210, 220, 230. The electrode pattern may be electrically connected to the light emitting diodes 210, 220, 230. The electrode pattern may include a conductive material. For example, the electrode pattern may include copper (Cu).

The substrate 122 may further include an insulating layer (not shown) on one surface on which the light emitting diodes 210, 220, 230 are mounted. The insulating layer may be referred to as a Photoimageable Solder Resist (PSR) layer. The insulating layer may cover most of the electrode pattern of the substrate 122. A portion of the electrode patterns may be exposed by the insulating layer. Light emitting diodes 210, 220, 230 may be provided on a portion of the electrode patterns. The light emitting diodes 210, 220, 230 may be in direct or indirect contact with or connected to a portion of the electrode patterns. For example, electrode pads may be provided between the light emitting diodes 210, 220, 230 and the electrode pattern, and may electrically connect the light emitting diodes 210, 220, 230 and the electrode patterns. The electrode pad may include a conductive material. For example, the electrode pad may include a lead (Pb).

The light source 200 may further include a protective lens 240 covering the light emitting diodes 210, 220, 230. The protective lens 240 may be mounted on one surface of the substrate 122. The protective lens 240 may protrude from one surface of the substrate 122. The protective lens 240 may have a dome shape or a hemispherical shape. Thus, the protective lens 240 may protect the light emitting diodes 210, 220, 230. In addition, the protective lens 240 may diffuse the light emitted from the light emitting diodes 210, 220, 230. The protective lens 240 may include a transparent or translucent material. For example, the protective lens 240 may include silicone or a synthetic polymer material.

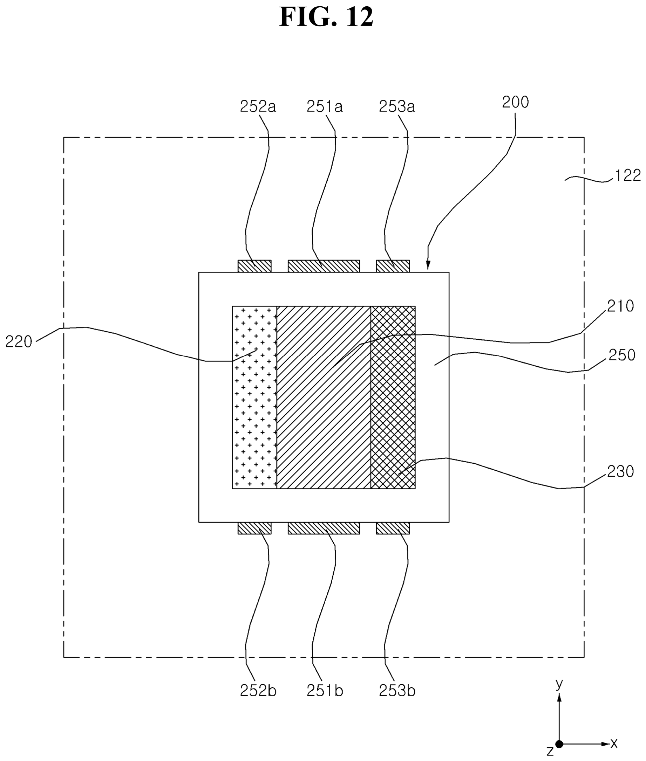

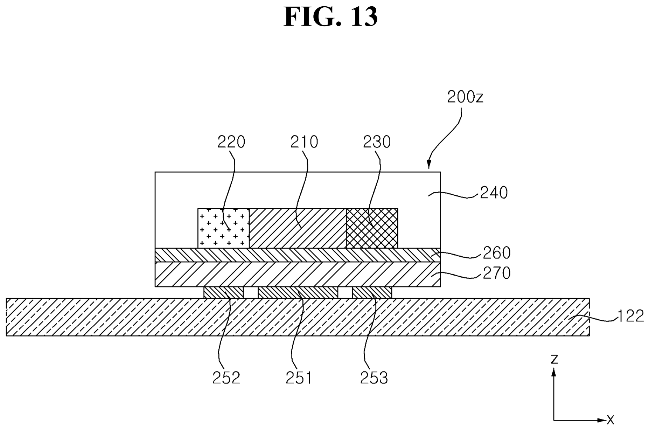

Referring to FIGS. 12 and 13, in one embodiment, the light source 200 may further include a chip substrate 270 on which light emitting diodes 210, 220, 230 are mounted, and a protective film 250 on the chip substrate 270. The light emitting diodes 210, 220, 230 may be directly mounted on the chip substrate 270. The chip substrate 270 may be mounted on the substrate 122. For example, the light source 200 may be formed in a Chip Scale Package (CSP) type.

The chip substrate 270 may be electrically connected to the substrate 122. Electrode pads 251, 252, 253 may be provided between the chip substrate 270 and the substrate 122. Electrode pads 251, 252, 253 may electrically connect the light emitting diodes 210, 220, 230 mounted on the chip substrate 270 and the substrate 122. The electrode pad 251, 252, 253 may include a conductive material. For example, the electrode pad 251, 252, 253 may include lead (Pb).

The electrode pad 251, 252, 253 may include a first electrode pad 251 electrically connected to the red light emitting diode 210, a second electrode pad 252 electrically connected to the green light emitting diode 220, and a third electrode pad 253 electrically connected to the blue light emitting diode 230. The first electrode pad 251 may be provided below the red light emitting diode 210. The second electrode pad 252 may be provided below the green light emitting diode 220. The third electrode pad 253 may be provided below the blue light emitting diode 230.

The light source 200 may further include a protective film 250 covering the light emitting diodes 210, 220, 230. The protective film 250 may be provided on one surface of the chip substrate 270. The protective film 250 may have a hexahedral shape. Thus, the protective film 250 may protect the light emitting diodes 210, 220, 230. The protective film 250 may include a transparent or translucent material. For example, the protective film 250 may include silicon or a synthetic polymer material.

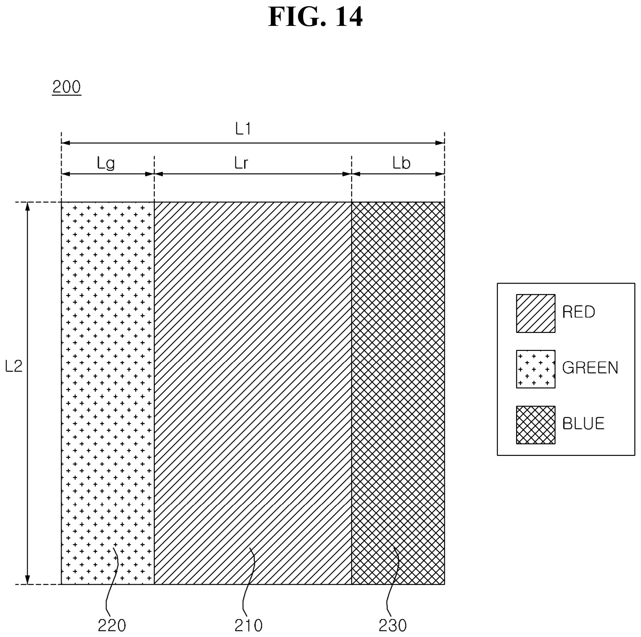

Referring to FIG. 14, the light source 200 may include a red light emitting diode 210, a green light emitting diode 220, and a blue light emitting diode 230. The light emitting diodes 210, 220, 230 may be arranged in one direction. For example, the green, red, and blue light emitting diodes 220, 210, 230 may be arranged in order in the row direction or left-right direction of the matrix pattern. The red light emitting diode 210 may be provided between the green and blue light emitting diodes 220, 230.

Each of the red, green, and blue light emitting diodes 210, 220, 230 may extend. The red, green, and blue light emitting diodes 210, 220, 230 may extend in the row direction or column direction of the matrix pattern. The red, green, and blue light emitting diodes 210, 220, 230 may extend in the long side direction or the short side direction of the substrate 122. For example, the red, green, and blue light emitting diodes 210, 220, 230 may extend in the column direction or the up-down direction of the matrix pattern.

The lengths of the red, green, and blue light emitting diodes 210, 220, 230 may be substantially same to each other. For example, each of the red, green, and blue light emitting diodes 210, 220, 230 may extend in the column direction or the up-down direction of the matrix pattern, and the lengths of the red, green, and blue light emitting diodes 210, 220, 230 may be substantially same to each other.

The widths of the red, green, and blue light emitting diodes 210, 220, 230 may be measured in a direction intersecting with the length direction. For example, the widths of the red, green, and blue light emitting diodes 210, 220, 230 may be measured in the row direction or left-right direction of the matrix pattern orthogonal to the length direction. The width of the red light emitting diode 210 may be greater than the widths of the green and blue light emitting diodes 220, 230. The width of the green light emitting diode 220 may be substantially the same as the width of the blue light emitting diode 230.

Each of the red, green, and blue light emitting diodes 210, 220, 230 may have a rectangular shape. The aspect ratio of the red light emitting diode 210 may be greater than the aspect ratios of the green and blue light emitting diodes 220, 230. The aspect ratios of the green and blue light emitting diodes 220, 230 may be substantially the same. The aspect ratio may be defined as the ratio of the horizontal length to the vertical length. For example, the aspect ratio may be defined as the ratio of the length in the row direction of the matrix pattern to the length in the column direction.

Each of the red, green, and blue light emitting diodes 210, 220, 230 may have a light-emitting surface. The light-emitting surfaces of the red, green, and blue light emitting diodes 210, 220, 230 may face the display panel 110. The light-emitting surfaces of the red, green, and blue light emitting diodes 210, 220, 230 may be defined in a planar view. The planar perspective may refer to a perspective viewed in a direction facing the light-emitting surfaces of the red, green, and blue light emitting diodes 210, 220, 230.

The light-emitting area of the red light emitting diode 210 may be greater than or equal to the light-emitting area of the green and/or blue light emitting diode 220, 230. The light-emitting area of the red light emitting diode 210 may be about 1.3 times larger than the light-emitting area of the green or blue light emitting diode 220, 230. For example, the light-emitting area of the red light emitting diode 210 may be about 2.0 times larger than the light-emitting areas of the green and blue light emitting diodes 220, 230. The light-emitting area may refer to the area of the light-emitting surface of the light emitting diode.

The light-emitting area of the blue light emitting diode 230 may be substantially the same as the light-emitting area of the green light emitting diode 220.

Accordingly, the current density of the red light emitting diode 210 may be lower than the current densities of the green and blue light emitting diodes 220, 230. The current density may be defined as the current applied to the light emitting diode with respect to the light-emitting area. The current density of the red light emitting diode 210 may be lower than the current density of the blue light emitting diode 230. For example, the current density of the red light emitting diode 210 may correspond to about 60 percent to about 100 percent of the current density of the blue light emitting diode 230. The current density of the blue light emitting diode 230 may be less than the current density of the green light emitting diode 220. For example, the current density of the blue light emitting diode 230 may correspond to about 60 percent to about 80 percent of the current density of the green light emitting diode 220. The current density of the green light emitting diode 220 may be about 1.3 times or more greater than the current density of the blue light emitting diode 230. For example, the ratio of the current density of the blue light emitting diode 230, the current density of the green light emitting diode 220, and the current density of the red light emitting diode 210 may correspond to about 1: about 1.4: about 0.8.

In addition, since the light-emitting area of the red light emitting diode 210 is larger than the light-emitting areas of the green and blue light emitting diodes 220, 230, the current applied to the red light emitting diode 210 may be further increased. The current applied to the red light emitting diode 210 may be larger than the currents applied to the green and blue light emitting diodes 220, 230. For example, the current applied to the red light emitting diode 210 may be about 1.5 times larger than the current applied to the blue light emitting diode 230. In addition, the current applied to the green light emitting diode 220 may be larger than the current applied to the blue light emitting diode 230. For example, the current applied to the green light emitting diode 220 may be about 1.3 times larger than the current applied to the blue light emitting diode 230. For example, the ratio of the current applied to the blue light emitting diode 230, the current applied to the green light emitting diode 220, and the current applied to the red light emitting diode 210 may be about 1: about 1.4: about 1.6. However, it is not limited thereto, and the ratio of the current applied to the blue light emitting diode 230, the current applied to the green light emitting diode 220, and the current applied to the red light emitting diode 210 may vary depending on the performance of the light emitting diode.

Nevertheless, the current density of the red light emitting diode 210 may be lower than the current densities of the green and blue light emitting diodes 220, 230, thereby reducing the heat generation of the red light emitting diode 210.

In addition, the performance degradation of the red light emitting diode 210 due to heat may be minimized.

In addition, the white light implementation performance of the light source 200 may be improved.

In addition, the operating temperature of the light source 200 may be lowered. For example, the light source 200 may operate within a range of about 40 degrees Celsius to about 70 degrees Celsius. The light source 200 may operate at about 50 degrees Celsius or lower.

In addition, the relative light efficiency of the red light emitting diode 210 may be greater than or equal to about 60 percent. Relative light efficiency may refer to light efficiency relative to maximum light efficiency. Light efficiency may refer to lumen (lm) relative to watt (W). Maximum light efficiency may correspond to light efficiency at the initial operation (e.g., at the start of operation) of the backlight unit 120. Light efficiency may gradually decrease over time.

In addition, a backlight unit 120 for a display device capable of improving color expression and/or brightness may be provided. For example, the relative brightness of the red light emitting diode 210 may be greater than or equal to about 85 percent. Relative brightness may mean brightness relative to maximum brightness. Brightness may mean luminous intensity (cd) per area (m²). Maximum brightness may correspond to brightness at the initial operation (e.g., at the start of operation) of the backlight unit 120. Brightness may gradually decrease over time.

The red, green, and blue light emitting diodes 210, 220, 230 may be arranged in the width direction. The red, green, and blue light emitting diodes 210, 220, 230 may be arranged in any order in the width direction. For example, the green, red, and blue light emitting diodes 220, 210, 230 may be arranged sequentially in the width direction.

The red, green, and blue light emitting diodes 210, 220, 230 may be arranged in contact with each other in an arranged direction. For example, the green, red, and blue light emitting diodes 220, 210, 230 may be continuously arranged sequentially without spacing. Adjacent sides of the red, green, and blue light emitting diodes 210, 220, 230 may overlap with each other. For example, one lateral side of the green light emitting diode 220 may overlap with one lateral side of the red light emitting diode 210, and the other lateral side of the red light emitting diode 210 may overlap with one lateral side of the blue light emitting diode 230. The light-emitting areas of the red, green, and blue light emitting diodes 210, 220, 230 may be arranged sequentially. The light-emitting surfaces of the red, green, and blue light emitting diodes 210, 220, 230 may form a single light-emitting surface.

The red, green, and blue light emitting diodes 210, 220, 230 may form a perimeter of a rectangle in a planar view. For example, the red, green, and blue light emitting diodes 210, 220, 230 may form a perimeter of a square in a planar view. The upper sides of the red, green, and blue light emitting diodes 210, 220, 230 may form one side of the light source 200, and the lower sides of the red, green, and blue light emitting diodes 210, 220, 230 may form the other side of the light source 200. The upper sides of the red, green, and blue light emitting diodes 210, 220, 230 may be arranged continuously. In addition, the lower sides of the red, green, and blue light emitting diodes 210, 220, 230 may be arranged continuously.

The light source 200 may have a rectangular shape in a planar view. The sum of the widths (Lr, Lg, Lb) of the red, green, and blue light emitting diodes 210, 220, 230 may correspond to the width of the light source 200. The length L2 of the red, green, or blue light emitting diode 230 may correspond to the length L2 of the light source 200. For example, the length L2 of the light source 200 may correspond to about 0.75 to about 1.25 times the width L1 of the light source 200.

The light source 200 may have a square shape in a planar view. For example, the width L1 of the light source 200 may be substantially same to the length L2 of the light source 200. For example, the sum L1 of the widths (Lr, Lg, Lb) of the red, green, and blue light emitting diodes 210, 220, 230 may be substantially same to the length L2 of the red, green, or blue light emitting diode 230.

Therefore, the light-emitting distribution of the red light emitting diode 210, the light-emitting distribution of the green light emitting diode 220, and the light-emitting distribution of the blue light emitting diode 230 may overlap as much as possible. The light-emitting distribution may mean the sum of the paths along which light is emitted from the light emitting diode.

In addition, the white light implementation performance of the light source 200 may be improved.

In addition, a backlight unit 120 for display device capable of improving color separation may be provided.

In addition, a backlight unit 120 for display device capable of expanding a viewing angle may be provided.

In addition, a backlight unit 120 for display device capable of reducing the size of a light source 200 may be provided.

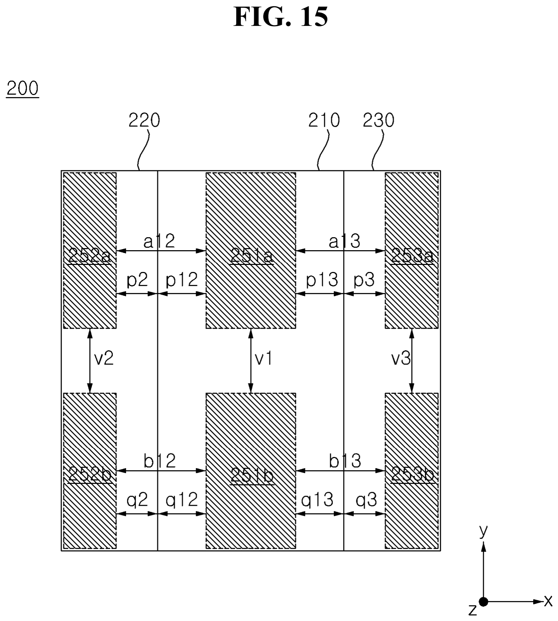

Referring to FIG. 15 together with FIG. 14, the backlight unit 120 for display device may further include at least one electrode pad provided between the light source 200 and the substrate 122. The at least one electrode pad may include a first electrode pad 251 electrically connecting the red light emitting diode 210 and the substrate 122, a second electrode pad 252 electrically connecting the green light emitting diode 220 and the substrate 122, and a third electrode pad 253 electrically connecting the blue light emitting diode 230 and the substrate 122.

The first electrode pad 251 may be provided below the red light emitting diode 210. The red light emitting diode 210 may cover the first electrode pad 251. For example, the red light emitting diode 210 may completely cover the first electrode pad 251. In a planar view, the first electrode pad 251 may completely overlap with the red light emitting diode 210. For example, in a planar view, the first electrode pad 251 may be located inside the rim of the red light emitting diode 210.

The first electrode pad 251 may be electrically connected to an electrode pattern of the substrate 122. The first electrode pad 251 may be in contact with the red light emitting diode 210 and the substrate 122.

The first electrode pad 251 may include a pair of first electrode pads 251a, 251b electrically connected to the red light emitting diode 210. The pair of first electrode pads 251a, 251b may correspond to different electrodes. For example, one 251a of the pair of first electrode pads 251a, 251b may correspond to a (+) electrode, and the other 251b of the pair of first electrode pads 251a, 251b may correspond to a (-) electrode.

The pair of first electrode pads 251a, 251b may be spaced apart from each other. For example, the pair of first electrode pads 251a, 251b may be spaced apart from each other in the length direction of the red light emitting diode 210. The gap v1 between the pair of first electrode pads 251a, 251b may be greater than or equal to about 100 micrometers (µm). For example, the gap v1 between the pair of first electrode pads 251a, 251b may be greater than or equal to about 150 micrometers.

The second electrode pad 252 may be provided below the green light emitting diode 220. The green light emitting diode 220 may cover the second electrode pad 252. For example, the green light emitting diode 220 may completely cover the second electrode pad 252. In a planar view, the second electrode pad 252 may completely overlap with the green light emitting diode 220. For example, in a planar view, the second electrode pad 252 may be located inside the rim of the green light emitting diode 220.

The second electrode pad 252 may be electrically connected to an electrode pattern of the substrate 122. The second electrode pad 252 may be in contact with the green light emitting diode 220 and the substrate 122.

The second electrode pad 252 may include a pair of second electrode pads 252a, 252b electrically connected to the green light emitting diode 220. The pair of second electrode pads 252a, 252b may correspond to different electrodes. For example, one 252a of the pair of second electrode pads 252a, 252b may correspond to a (+) electrode, and the other 252b of the pair of second electrode pads 252a, 252b may correspond to a (-) electrode.

The pair of second electrode pads 252a, 252b may be spaced apart from each other. For example, the pair of second electrode pads 252a, 252b may be spaced apart from each other in the length direction of the green light emitting diode 220. The gap v2 between the pair of second electrode pads 252a, 252b may be greater than or equal to about 100 micrometers. For example, the gap v2 between the pair of second electrode pads 252a, 252b may be greater than or equal to about 150 micrometers.

The third electrode pad 253 may be provided below the blue light emitting diode 230. The blue light emitting diode 230 may cover the third electrode pad 253. For example, the blue light emitting diode 230 may completely cover the third electrode pad 253. In a planar view, the third electrode pad 253 may completely overlap with the blue light emitting diode 230. For example, in a planar view, the third electrode pad 253 may be located inside the rim of the blue light emitting diode 230.

The third electrode pad 253 may be electrically connected to an electrode pattern of the substrate 122. The third electrode pad 253 may be in contact with the blue light emitting diode 230 and the substrate 122.

The third electrode pad 253 may include a pair of third electrode pads 253a, 253b electrically connected to the blue light emitting diode 230. The pair of third electrode pads 253a, 253b may correspond to different electrodes. For example, one 253a of a pair of third electrode pads 253a, 253b may correspond to a (+) electrode, and the other 253b of a pair of third electrode pads 253a, 253b may correspond to a (-) electrode.

A pair of third electrode pads 253a, 253b may be spaced apart from each other. For example, the pair of third electrode pads 253a, 253b may be spaced apart from each other in the length direction of the blue light emitting diode 230. The gap v3 between the pair of third electrode pads 253a, 253b may be greater than or equal to about 100 micrometers. For example, the gap v3 between the pair of third electrode pads 253a, 253b may be greater than or equal to about 150 micrometers.

Therefore, a pair of electrode pads 251, 252, 253 may not be electrically connected to each other.

The first to third electrode pads 251, 252, 253 may be spaced apart from each other. For example, the first to third electrode pads 251, 252, 253 may be spaced apart from each other in the arrangement direction or width direction of the red, green, and blue light emitting diodes 210, 220, 230. For example, the gap a12, a13, b12, b13 between the first to third electrode pads 251, 252, 253 may be greater than or equal to about 100 micrometers. The gap a12, b12 between the first electrode pad 251 and the second electrode pad 252 may be greater than or equal to about 100 micrometers. In addition, the gap a13, b13 between the first electrode pad 251 and the third electrode pad 253 may be greater than or equal to about 100 micrometers.

Specifically, the first electrode pad 251 may be spaced apart from the lateral sides of the red light emitting diode 210. For example, the gap p12, q12 between the first electrode pad 251 and one lateral side of the red light emitting diode 210 may be greater than or equal to about 50 micrometers. In addition, the gap p13, q13 between the first electrode pad 251 and the other lateral side of the red light emitting diode 210 may be greater than or equal to about 50 micrometers.

The second electrode pad 252 may be spaced apart from one lateral side of the green light emitting diode 220. The second electrode pad 252 may be adjacent to the other lateral side of the green light emitting diode 220. The other lateral side of the green light emitting diode 220 may face the one lateral side. For example, the gap p2, q2 between the second electrode pad 252 and one lateral side of the green light emitting diode 220 may be greater than or equal to about 50 micrometers.

The third electrode pad 253 may be spaced apart from one lateral side of the blue light emitting diode 230. The third electrode pad 253 may be adjacent to the other lateral side of the blue light emitting diode 230. The other lateral side of the blue light emitting diode 230 may face the one lateral side. For example, the gap p3, q3 between the third electrode pad 253 and one lateral side of the blue light emitting diode 230 may be greater than or equal to about 50 micrometers.

Accordingly, the first to third electrode pads 251, 252, 253 may be sufficiently spaced apart from each other. For example, the gap a12, b12 between the first and second electrode pads 251, 252 may be greater than or equal to about 100 micrometers. The gap a13, b13 between the first and third electrode pads 253a, 253b may be greater than or equal to about 100 micrometers. Therefore, the first to third electrode pads 251, 252, 253 may not be electrically connected to each other.

In addition, the red, green, and blue light emitting diodes 210, 220, 230 may receive currents having different magnitudes.

In addition, the currents applied to the red, green, and blue light emitting diodes 210, 220, 230 may be independently controlled.

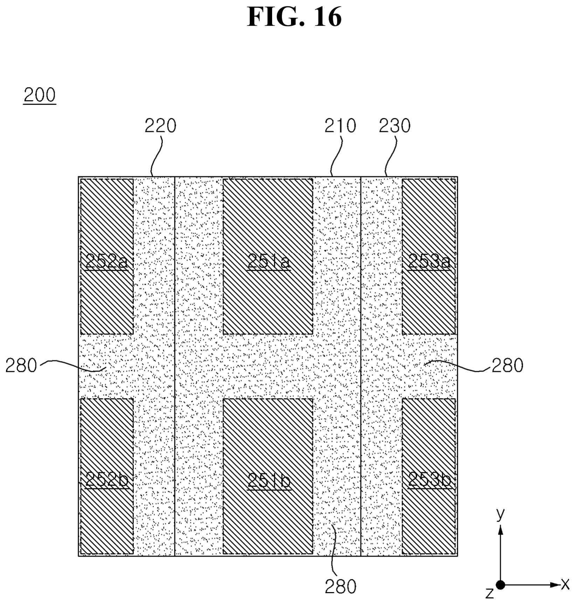

Referring to FIG. 16 together with FIG. 15, in one embodiment, the backlight unit 120 for display device may further include a heat dissipation pattern 280 between the electrode pads 251, 252, 253. The heat dissipation pattern 280 may be provided below the light source 200. The heat dissipation pattern 280 may be provided between the substrate 122 and the light source 200. For example, the heat dissipation pattern 280 may be provided below the red, green, and blue light emitting diodes 210, 220, 230. The heat dissipation pattern 280 may include an insulating material. The heat dissipation pattern 280 may include a thermally conductive material.

Therefore, the heat generated from the light source 200 may be quickly dissipated.

In addition, a backlight unit 120 for display device capable of lowering the operating temperature of the light source 200 may be provided.

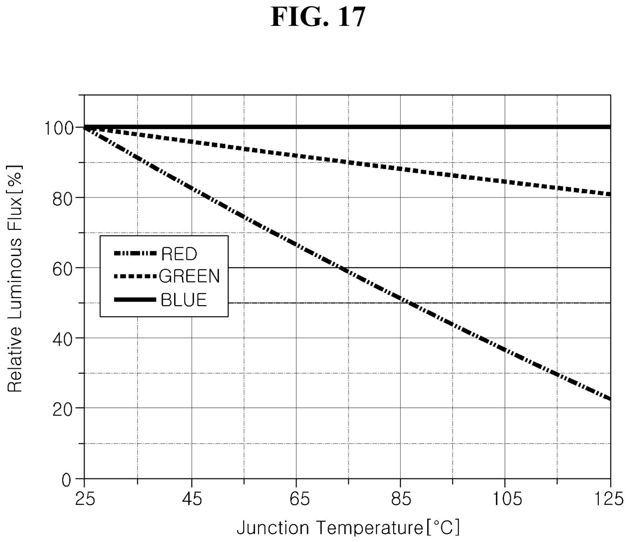

Referring to FIG. 17 together with FIG. 14, the relative luminous flux of red, green, and blue light emitting diodes 210, 220, 230 according to temperature may be seen. The relative luminous flux of the red, green, and blue light emitting diodes 210, 220, 230 may decrease as the temperature increases. The relative luminous flux may mean the luminous flux at a specific temperature with respect to the maximum luminous flux (e.g., luminous flux at about 25 degrees Celsius). The luminous flux of the red, green, and blue light emitting diodes 210, 220, 230 may have a maximum value at about 25 degrees Celsius, and may decrease as the temperature gradually increases at about 25 degrees Celsius.

On a graph, the red and green light emitting diodes 210, 220 may have a negative slope less than 0. The slope of the red light emitting diode 210 may be smaller than the slope of the green and blue light emitting diodes 220, 230. The absolute value of the slope of the red light emitting diode 210 may be larger than the absolute value of the slope of the green and blue light emitting diodes 220, 230. The temperature-dependent luminous flux change rate of the red light emitting diode 210 may be larger than the temperature-dependent luminous flux change rates of the green and blue light emitting diodes 220, 230.

The relative luminous flux of the red light emitting diode 210 may decrease more rapidly as the temperature increases. The red light emitting diode 210 may have temperature sensitivity.

The slope of the green light emitting diode 220 may be smaller than the slope of the blue light emitting diode 230. The absolute value of the slope of the green light emitting diode 220 may be larger than the absolute value of the slope of the blue light emitting diode 230. The temperature-dependent luminous flux change rate of the green light emitting diode 220 may be greater than the temperature-dependent luminous flux change rate of the blue light emitting diode 230. The relative luminous flux of the green light emitting diode 220 may gradually decrease as the temperature increases. The green light emitting diode 220 may have temperature sensitivity. The temperature sensitivity of the red light emitting diode 210 may be greater than the temperature sensitivity of the green light emitting diode 220.

The blue light emitting diode 230 may have a slope that approaches 0. The temperature-dependent luminous flux change rate of the blue light emitting diode 230 may be close to 0. The relative luminous flux of the blue light emitting diode 230 may hardly change even when the temperature increases. The blue light emitting diode 230 may have little temperature sensitivity.

Accordingly, as the temperature increases, the relative luminous flux and light efficiency of the red light emitting diode 210 among the light emitting diodes 210, 220, 230 of the light source 200 may rapidly decrease.

In addition, as the temperature increases, the white light implementation performance of the light source may deteriorate due to the performance limit of the red light emitting diode 210. For example, white light closer to green or blue may be emitted. For example, white light with a reduced x-coordinate Cx value in a color coordinate may be implemented, or white light with a higher color temperature may be implemented.

This may lead to a deterioration in the image quality and color expression of the display device. In addition, it may also lead to visual fatigue for a user.

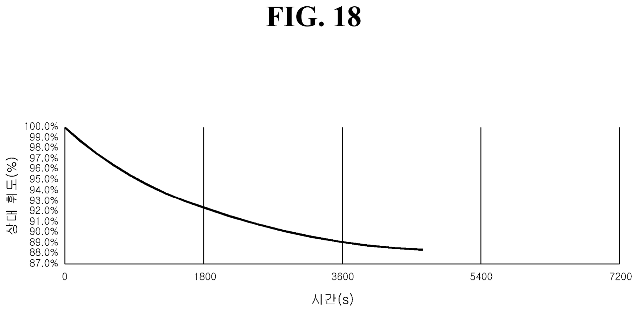

Referring to FIG. 18 together with FIG. 14, when the backlight unit 120 for display device according to one embodiment of the present disclosure begins operating, the relative brightness % of the backlight unit 120 may gradually decrease over time. Relative brightness % may mean brightness (cd/m2) with respect to maximum brightness (cd/m2). The maximum brightness may correspond to the brightness at the initial operation time of the backlight unit 120.

Specific values of the relative brightness of the backlight unit 120 over time may be shown in Table 1 below.

**[Table 1]**

| | | | |
|---|---|---|---|
| A. | Time (seconds, s) | B. | Relative brightness (%) |
| C. | 0 | D. | 100 |
| E. | 1800 | F. | 92.4 |
| G. | 3600 | H. | 89.1 |
| I. | 4500 | J. | 88.4 |

The change range in relative brightness (%) with respect to time (s) of the backlight unit 120, i.e., the relative brightness change rate (%/s), may gradually decrease. For example, the relative brightness of the backlight unit 120 may decrease rapidly at the beginning of operation, and the decrease in relative brightness may gradually decrease over time. Accordingly, the relative brightness of the backlight unit 120 may gradually converge to a constant value. For example, after a sufficient amount of operation time has elapsed, the relative brightness of the backlight unit may converge to a range of about 85 percent to about 90 percent.

Therefore, the backlight unit 120 for display device may achieve a certain level of performance or higher.

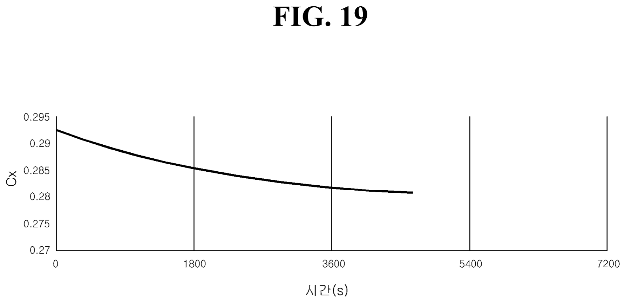

Referring to FIG. 19 together with FIG. 14, when the backlight unit 120 for display device according to one embodiment of the present disclosure begins operation, the x-coordinate Cx of the color coordinates of the emitted light may gradually decrease over time. That is, the proportion of red light may gradually decrease over time.

The specific values of the x-coordinate Cx of the color coordinates of the backlight unit 120 over time may be shown in Table 2 below.

**[Table 2]**

| | | | |
|---|---|---|---|
| A. | Time (seconds, s) | B. | Cx |
| C. | 0 | D. | 0.2926 |
| E. | 1800 | F. | 0.2855 |
| G. | 3600 | H. | 0.2819 |
| I. | 4500 | J. | 0.2810 |

The change range (△Cx) of the x-coordinate Cx of the color coordinates with respect to time (s), i.e., the x-coordinate change rate (△Cx/s), may gradually decrease. For example, when the backlight unit 120 to operate, the x-coordinate Cx of the color coordinates may decrease rapidly at the beginning of operation, and the decrease range may gradually decrease over time. Accordingly, the x-coordinate Cx of the color coordinates of the light generated by the backlight unit 120 may gradually converge to a certain value. For example, after a sufficient amount of operation time has elapsed, the x-coordinate Cx of the color coordinates of the light generated by the backlight unit 120 may converge within a range of approximately 0.275 to approximately 0.285.

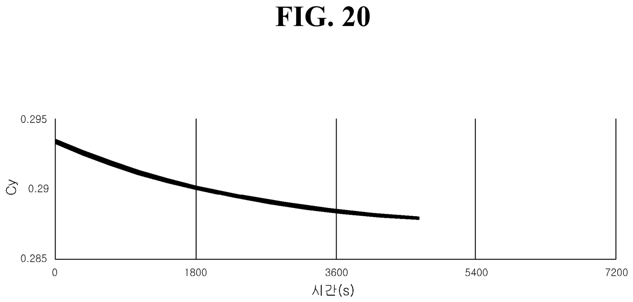

Accordingly, the backlight unit 120 for display device may secure an x-coordinate Cx having a certain value or higher. Referring to FIG. 20 together with FIG. 14, when the backlight unit 120 for display device according to one embodiment of the present disclosure begins operation, the y-coordinate Cy of the color coordinates of the emitted light may gradually decrease over time. In other words, the proportion of green light may gradually decrease over time.

The specific values of the y-coordinate Cy of the color coordinates of the backlight unit 120 over time may be shown in Table 3 below.

**[Table 3]**

| | | | |
|---|---|---|---|
| A. | Time (seconds, s) | B. | Cy |
| C. | 0 | D. | 0.2935 |
| E. | 1800 | F. | 0.2901 |
| G. | 3600 | H. | 0.2884 |
| I. | 4500 | J. | 0.2880 |

The change range (△Cy) of the y-coordinate Cy of the color coordinates with respect to time (s), i.e., the y-coordinate change rate (△Cy/s), may gradually decrease. For example, when the backlight unit 120 to operate, the y-coordinate Cy of the color coordinates may decrease rapidly at the beginning of operation, and the decrease range may gradually decrease over time. Accordingly, the y-coordinate Cy of the color coordinates of the light generated by the backlight unit 120 may gradually converge to a certain value. For example, after a sufficient amount of operation time has elapsed, the y-coordinate Cy of the color coordinates of the light generated by the backlight unit 120 may converge within a range of approximately 0.275 to approximately 0.285.

Accordingly, the backlight unit 120 for display device may secure a y-coordinate Cx having a certain value or higher.

Hereinafter, various embodiments 200a to 200w of a light source according to the present disclosure will be described. The components of the light source 200a to 200w according to each embodiment may be substantially same to the components of the light source 200 described above. That is, the descriptions of the technical solutions and technical effects of the light source 200 described above may also be applied to the light sources 200a to 200w described below. For example, the light-emitting area of the red light emitting diode 210 may be larger than the light-emitting area of the green and blue light emitting diodes 220, 230. In addition, each of the light sources 200a to 200w may have a substantially square shape. Therefore, for convenience of explanation, the following description will focus on differences from the previously described light source 200.

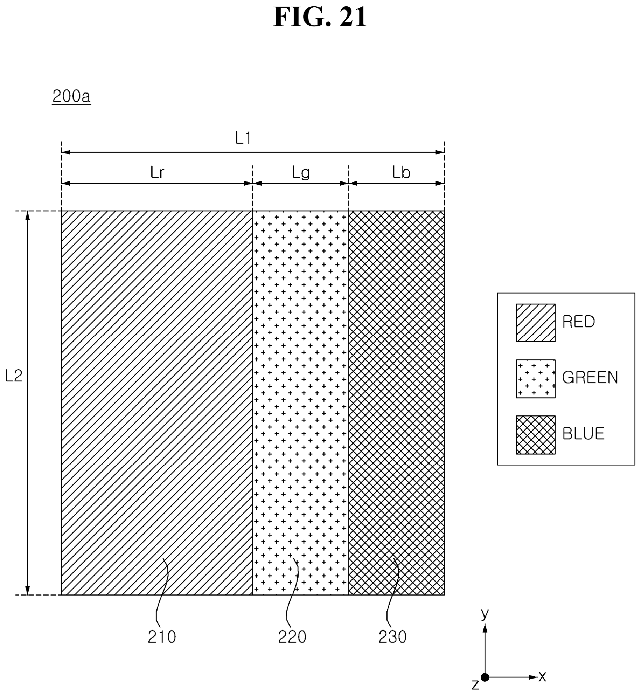

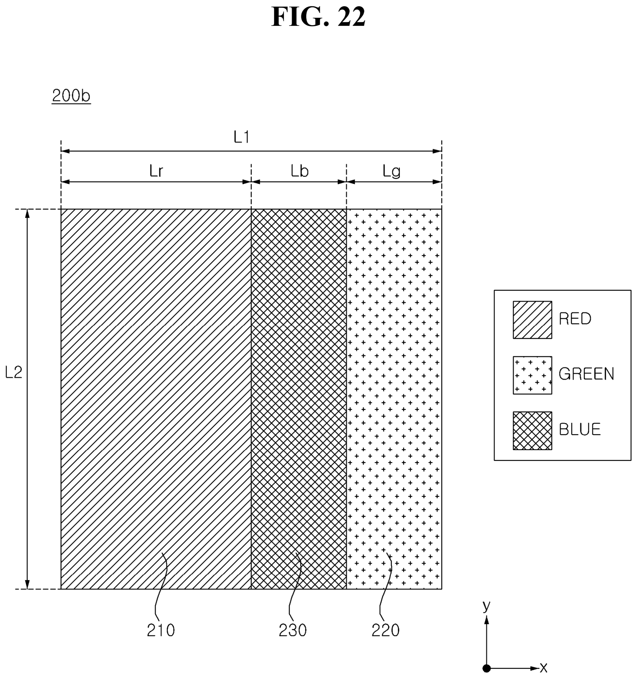

Referring to FIGS. 21 and 22, in one embodiment, the red light emitting diode 210 may be located at an edge of an array of light emitting diodes 210, 220, 230. For example, the light emitting diodes 210, 220, 230 may be arranged in the order of red, green, and blue light emitting diodes 210, 220, 230. Conversely, the light emitting diodes 210, 220, 230 may be arranged in the order of blue, green, and red light emitting diodes 230, 220, 210.

In one embodiment, the light emitting diodes 210, 220, 230 may be arranged in the order of red, blue, and green light emitting diodes 210, 230, 220. Conversely, the light emitting diodes 210, 220, 230 may be arranged in the order of green, blue, and red light emitting diodes 220, 230, 210.

Accordingly, the red light emitting diode 210, which has the highest temperature sensitivity, may be spaced apart from the center of the light source 200a, 200b where heat is concentrated. Similarly, the green light emitting diode 220, which has temperature sensitivity, may be spaced apart from the center of the light source 200b where heat is concentrated. Therefore, the performance degradation of the red and green light emitting diodes 210, 220 due to temperature increase may be minimized.

In addition, a blue light emitting diode 230, which has little temperature sensitivity, may be disposed at the center of the light source 200b where heat may be concentrated.

In addition, heat generated from the red and green light emitting diodes 210, 220 may be smoothly dissipated.

In addition, the white light implementation performance of the light sources 200a, 200b may be improved.

In addition, the operating temperature of the light source 200a, 200b may be reduced.

In addition, a backlight unit 120 for display device capable of improving color expression and/or brightness may be provided.

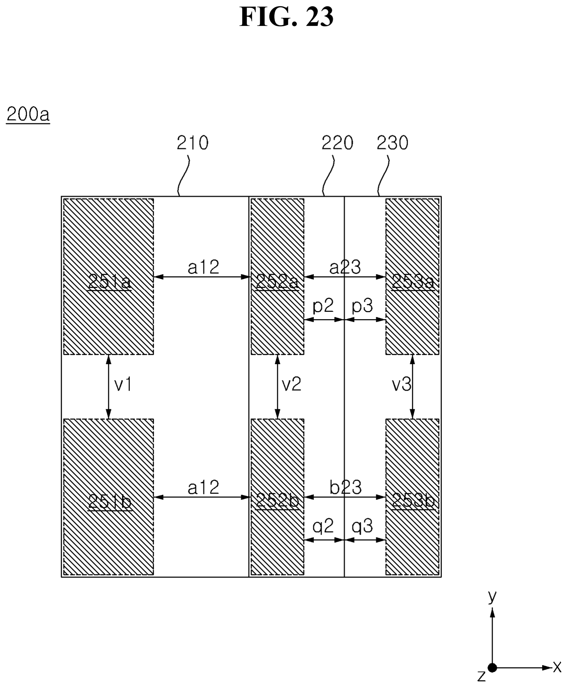

Referring to FIG. 23 together with FIG. 21, a pair of first electrode pads 251a, 251b may be provided below the red light emitting diode 210. The pair of first electrode pads 251a, 251b may completely overlap with the red light emitting diode 210 in a planar view. For example, a pair of first electrode pads 251a, 251b may be located inside the rim of the red light emitting diode 210 in a planar view.

The pair of first electrode pads 251a, 251b may be spaced apart from each other in the length direction of the red light emitting diode 210. The gap v1 between the pair of first electrode pads 251a, 251b may be greater than or equal to about 100 micrometers. For example, the gap v1 between the pair of first electrode pads 251a, 251b may be greater than or equal to about 150 micrometers.

The first electrode pad 251 may be spaced apart from one lateral side of the red light emitting diode 210. The first electrode pad 251 may be adjacent to the other lateral side of the red light emitting diode 210. The other lateral side of the red light emitting diode 210 may be opposite to one lateral side. For example, the gap p1, q1 between the first electrode pad 251 and one lateral side of the red light emitting diode 210 may be greater than or equal to about 100 micrometers.

A pair of second electrode pads 252a, 252b may be provided below the green light emitting diode 220. The pair of second electrode pads 252a, 252b may completely overlap with the green light emitting diode 220 in a planar view. For example, the pair of second electrode pads 252a, 252b may be located inside the rim of the green light emitting diode 220 in a planar view.

The second electrode pad 252 may be spaced apart from one lateral side of the green light emitting diode 220. The second electrode pad 252 may be adjacent to the other lateral side of the green light emitting diode 220. The other lateral side of the green light emitting diode 220 may face the one lateral side. For example, the gap p2, q2 between the second electrode pad 252 and the one lateral side of the green light emitting diode 220 may be greater than or equal to about 50 micrometers. The other lateral side of the green light emitting diode 220 may overlap with the one lateral side of the red light emitting diode 210 in a planar view.

In addition, the second electrode pad 252 may be spaced apart from the first electrode pad 251. For example, the second electrode pad 252 may be spaced apart from the first electrode pad 251 in the width direction of the light source 200a. The gap between the first electrode pad 251 and the second electrode pad 252 may be greater than or equal to about 100 micrometers. The gap between the first electrode pad 251 and the second electrode pad 252 may be greater than the gap p1, q1 between the first electrode pad 251 and one lateral side of the red light emitting diode 210.

A pair of third electrode pads 253a, 253b may be provided below the blue light emitting diode 230. The pair of third electrode pads 253a, 253b may completely overlap with the blue light emitting diode 230 in a planar view. For example, the pair of third electrode pads 253a, 253b may be located inside the rim of the blue light emitting diode 230 in a planar view.

The third electrode pad 253 may be spaced apart from one lateral side of the blue light emitting diode 230. The third electrode pad 253 may be adjacent to the other lateral side of the blue light emitting diode 230. The other lateral side of the blue light emitting diode 230 may face one lateral side. The one lateral side of the blue light emitting diode 230 may overlap with the one lateral side of the green light emitting diode 220. For example, the gap p3, q3 between the third electrode pad 253 and the one lateral side of the blue light emitting diode 230 may be greater than or equal to about 50 micrometers.

In addition, the third electrode pad 253 may be spaced apart from the second electrode pad 252. For example, the third electrode pad 253 may be spaced apart from the second electrode pad 252 in the width direction of the light source 200a. The gap a23, b23 between the second electrode pad 252 and the third electrode pad 253 may be greater than or equal to about 100 micrometers.

Accordingly, the first to third electrode pads 251, 252, 253 may be sufficiently spaced apart from each other. For example, the gap between the first and second electrode pads 251, 252 may be greater than or equal to about 100 micrometers. The gap between the second and third electrode pads 252, 253 may be greater than or equal to about 100 micrometers. Therefore, the first to third electrode pads 251, 252, 253 may not be electrically connected to each other.

In addition, the red, green, and blue light emitting diodes 210, 220, 230 may receive currents having different magnitudes.

In addition, the currents applied to the red, green, and blue light emitting diodes 210, 220, 230 may be independently controlled.

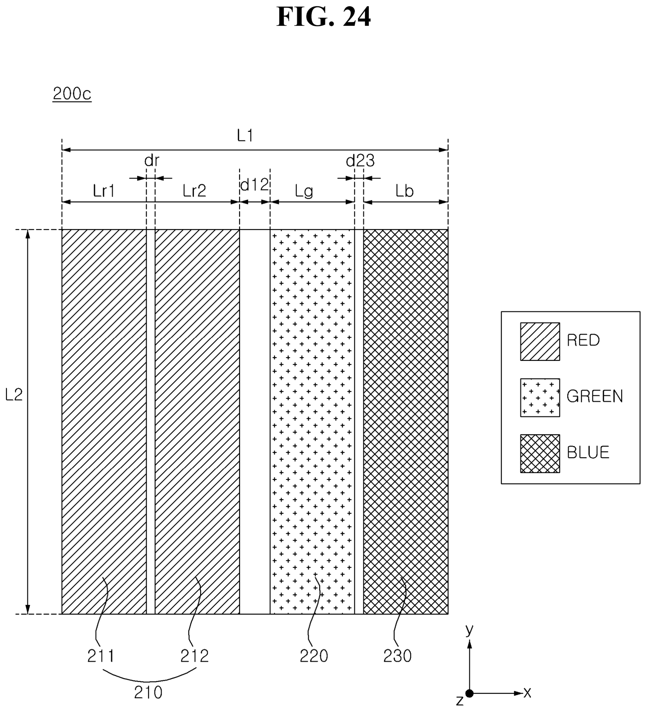

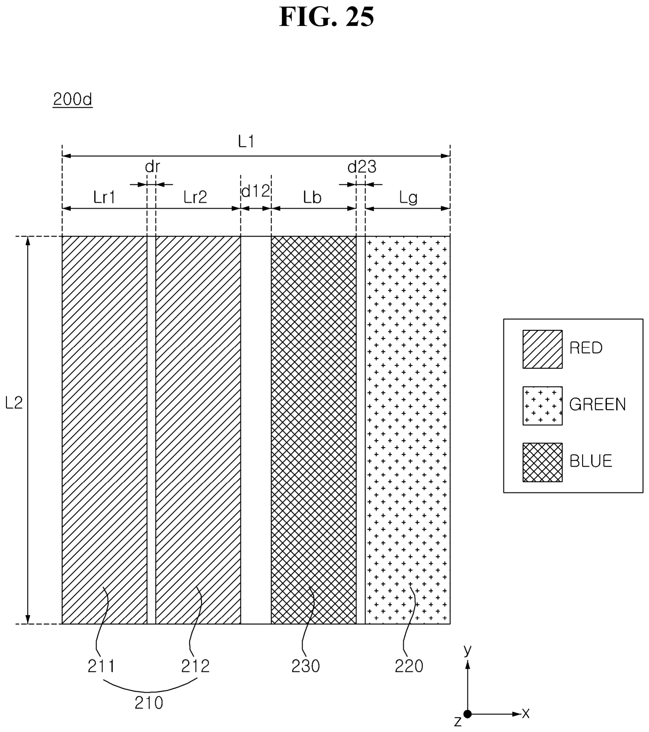

Referring to FIGS. 24 and 25, the red light emitting diode 210 may include a first red light emitting diode 211 and a second red light emitting diode 212. The first and second red light emitting diodes 211, 212 may extend. For example, the first and second red light emitting diodes 211, 212 may extend in the length direction of the light source 200c, 200d.

The lengths L2 of the first and second red light emitting diodes 211, 212 may be substantially the same. For example, the lengths L2 of the first and second red light emitting diodes 211, 212 may be substantially the same as the length L2 of the light source 200c, 200d.

The widths Lr1, Lr2 of the first and second red light emitting diodes 211, 212 may be substantially the same. The widths Lr1, Lr2 of the first and second red light emitting diodes 211, 212 may be measured in the width direction of the light source 200c, 200d.

The light-emitting areas of the first and second red light emitting diodes 211, 212 may be substantially the same. For example, since the lengths L2 and widths Lr1, Lr2 of the first and second red light emitting diodes 211, 212 are substantially the same, the light-emitting areas of the first and second red light emitting diodes 211, 212 may be substantially the same.

The first and second red light emitting diodes 211, 212 may be adjacent to each other. The first and second red light emitting diodes 211, 212 may be neighbouring each other. The first and second red light emitting diodes 211, 212 may be arranged continuously in the width direction of the light source 200c, 200d. For example, green or blue light emitting diodes 220, 230 may not be arranged between the first and second red light emitting diodes 211, 212.

The first and second red light emitting diodes 211, 212 may be spaced apart from each other. The first and second red light emitting diodes 211, 212 may be spaced apart from each other in the arrangement direction. For example, the first and second red light emitting diodes 211, 212 may be spaced apart from each other in a width direction intersecting with the length direction. For example, the gap (dr) between the first and second red light emitting diodes 211, 212 may be less than or equal to about 50 micrometers.

Accordingly, the heat dissipation performance of the red light emitting diode 210 may be improved. For example, the first and second red light emitting diodes 211, 212 may be spaced apart from each other, thereby minimizing the concentration of heat generated by the first and second red light emitting diodes 211, 212.

In addition, the performance degradation of the red light emitting diode 210 due to heat may be minimized.

In addition, the white light implementation performance of the light source 200c may be improved.

In addition, the operating temperature of the light source 200c may be lowered.

In addition, a backlight unit 120 for display device capable of improving color expression and/or brightness may be provided.

The first and second red light emitting diodes 211, 212 may be spaced apart from the green and blue light emitting diodes 220, 230. For example, the first and second red light emitting diodes 211, 212, the green and blue light emitting diodes 220, 230 may be arranged sequentially. In one embodiment, the first and second red light emitting diodes 211, 212, and the blue and green light emitting diodes 230, 220 may be arranged sequentially.

The second red light emitting diode 212 and the green light emitting diode 220 may be spaced apart from each other. For example, the gap d12 between the second red light emitting diode 212 and the green light emitting diode 220 may be greater than or equal to about 50 micrometers.

The green light emitting diode 220 and the blue light emitting diode 230 may be spaced apart from each other. For example, the gap d23 between the green light emitting diode 220 and the blue light emitting diode 230 may be less than or equal to about 50 micrometers. The gap d23 between the green and blue light emitting diodes 230 may be less than the gap d12 between the second red light emitting diode 212 and the green light emitting diode 220.

The gap dr between the first and second red light emitting diodes 211, 212 may be smaller than the gap d12 between the second red light emitting diode 212 and the green light emitting diode 220. The gap dr between the first and second red light emitting diodes 211, 212 may be smaller than or equal to the gap d23 between the green and blue light emitting diodes 220, 230.

The light source 200c may have a square shape. For example, the width L1 of the light source 200c may correspond to about 0.8 to about 1.25 times the length L2 of the light source 200c. The width L1 of the light source 200c may correspond to the sum of the widths (Lr1, Lr2, Lg, Lb) of the light emitting diodes 210, 220, 230 and the gaps (dr, d12, d23) between the light emitting diodes. For example, the width L1 of the light source 200c may correspond to the sum of the widths (Lr1, Lr2, Lg, Lb) of the light emitting diodes 210, 220, 230, the gap (dr) between the first and second red light emitting diodes 211, 212, the gap d12 between the second red light emitting diode 212 and the green light emitting diode 220, and the gap d23 between the green and blue light emitting diodes 220, 230.

The length L2 of the light source 200c may correspond to the length of one of the light emitting diodes 210, 220, 230. For example, the lengths L2 of the light emitting diodes 210, 220, 230 may be substantially the same, and the length L2 of the light source 200 may correspond to the length L2 of the first red light emitting diode 211.

The light source 200c may have a square shape. The width L2 of the light source 200c may be substantially the same as the length L1 of the light source 200.

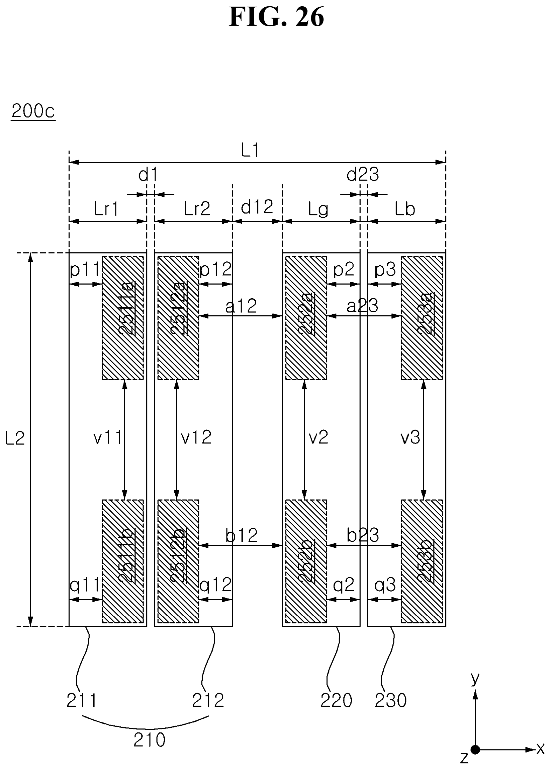

Referring to FIG. 26 together with FIG. 24, a pair of first electrode pads 2511a, 2511b may be provided below the first red light emitting diode 211. Another pair of first electrode pads 2512a, 2512b may be provided below the second red light emitting diode 212.

The pair of first electrode pads 2511a, 2511b may completely overlap with the first red light emitting diode 211 in a planar view. For example, the pair of first electrode pads 2511a, 2511b may be located inside the rim of the first red light emitting diode 211 in a planar view.

Another pair of first electrode pads 2512a, 2512b may completely overlap with the second red light emitting diode 212 in a planar view. For example, another pair of first electrode pads 2512a, 2512b may be located inside the rim of the second red light emitting diode 212 in a planar view.

The pair of first electrode pads 2511a, 2511b may be spaced apart from one lateral side of the first red light emitting diode 211. The pair of first electrode pads 2511a, 2511b may be adjacent to the other lateral side of the first red light emitting diode 211. For example, the gap p11, q11 between the pair of first electrode pads 2511a, 2511b and one lateral side of the first red light emitting diode 211 may be greater than or equal to about 50 micrometers.

Another pair of first electrode pads 2512a, 2512b may be spaced apart from one lateral side of the second red light emitting diode 212. Another pair of first electrode pads 2512a, 2512b may be adjacent to the other lateral side of the second red light emitting diode 212. For example, the gap p12, q12 between another pair of first electrode pads 2512a, 2512b and one lateral side of the second red light emitting diode 212 may be greater than or equal to about 50 micrometers. The other lateral side of the second red light emitting diode 212 may be adjacent to the other lateral side of the first red light emitting diode 211.

The second pair of electrode pads 252a, 252b may be provided below the green light emitting diode 220. A pair of second electrode pads 252a, 252b may completely overlap with the green light emitting diode 220 in a planar view. For example, the pair of second electrode pads 252a, 252b may be located inside the rim of the green light emitting diode 220 in a planar view.

The second electrode pad 252 may be spaced apart from one lateral side of the green light emitting diode 220. The second electrode pad 252 may be adjacent to the other lateral side of the green light emitting diode 220. The other lateral side of the green light emitting diode 220 may be opposite to the one side. For example, a gap p2, q2 between the second electrode pad 252 and the one lateral side of the green light emitting diode 220 may be greater than or equal to about 50 micrometers. The other lateral side of the green light emitting diode 220 may be adjacent to one lateral side of the red light emitting diode 210 in a planar view.

In addition, the second electrode pad 252 may be spaced apart from the first electrode pad 251. For example, the second electrode pad 252 may be spaced apart from the first electrode pad 251 in the width direction of the light source 200. The gap a12 between the first electrode pad 251 and the second electrode pad 252 may be greater than or equal to about 100 micrometers.

A pair of third electrode pads 253a, 253b may be provided below the blue light emitting diode 230. The pair of third electrode pads 253a, 253b may completely overlap with the blue light emitting diode 230 in a planar view. For example, the pair of third electrode pads 253a, 253b may be located inside the rim of the blue light emitting diode 230 in a planar view.

The third electrode pad 253 may be spaced apart from one lateral side of the blue light emitting diode 230. The third electrode pad 253 may be adjacent to the other lateral side of the blue light emitting diode 230. The other lateral side of the blue light emitting diode 230 may face the one lateral side. For example, the gap p3, q3 between the third electrode pad 253 and the one lateral side of the blue light emitting diode 230 may be greater than or equal to about 50 micrometers. The one lateral side of the blue light emitting diode 230 may be adjacent to the one lateral side of the green light emitting diode 220.

In addition, the third electrode pad 253 may be spaced apart from the second electrode pad 252. For example, the second electrode pad 253 may be spaced apart from the second electrode pad 252 in the width direction of the light source 200. The gap a23 between the second electrode pad 252 and the third electrode pad 253 may be greater than or equal to about 100 micrometers.

Accordingly, the first to third electrode pads 251, 252, 253 may be sufficiently spaced apart from each other. For example, the gap a12 between the first and second electrode pads 251, 252 may be greater than or equal to about 100 micrometers. The gap a23 between the second and third electrode pads 252, 253 may be greater than or equal to about 100 micrometers. Therefore, the first to third electrode pads 251, 252, 253 may not be electrically connected to each other.

In addition, the red, green, and blue light emitting diodes 210, 220, 230 may receive currents of different magnitudes.

In addition, the currents applied to the red, green, and blue light emitting diodes 210, 220, 230 may be independently controlled.

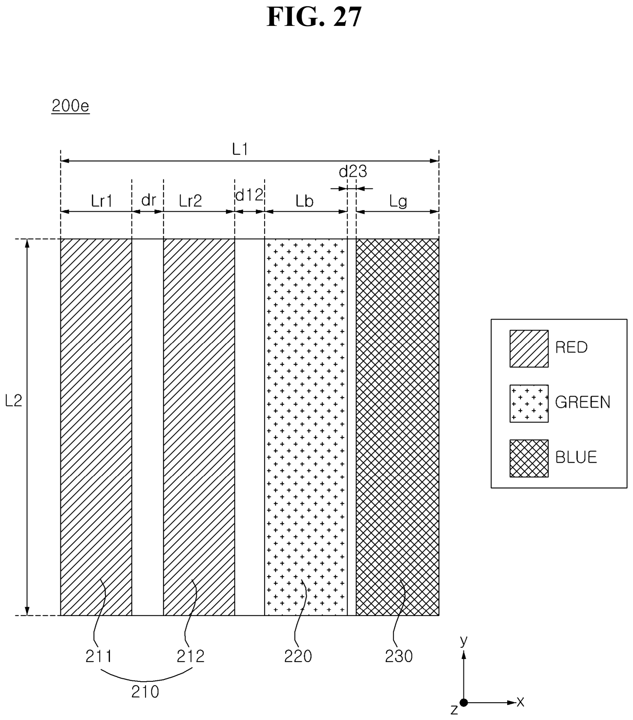

The components of each of the light sources 200e, 200f described in FIGS. 27 to 29 may be substantially same to the components of the light sources 200, 200a to 200d described above. In addition, the descriptions of the technical solutions and technical effects of the light sources 200, 200a to 200d described above may also be applied to the light sources 200e, 200f described below. Therefore, for convenience of explanation, the following description will focus on differences from the light sources 200, 200a to 200d described above.

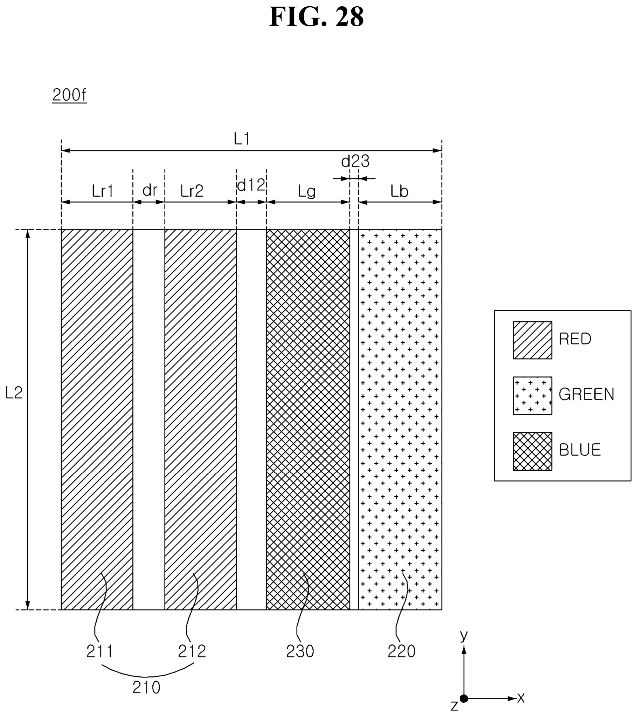

Referring to FIGS. 27 and 28, the first and second red light emitting diodes 211, 212 may be further spaced apart. For example, the gap dr between the first and second red light emitting diodes 211, 212 may be greater than or equal to about 50 micrometers.

Accordingly, the heat dissipation performance of the red light emitting diode 210 may be further improved. For example, the first and second red light emitting diodes 211, 212 may be further spaced apart from each other, thereby minimizing the concentration of heat generated by the first and second red light emitting diodes 211, 212.

In addition, the performance degradation of the red light emitting diode 210 due to heat may be minimized.

In addition, the white light implementation performance of the light source 200e may be improved.

In addition, the operating temperature of the light source 200e may be lowered.

In addition, a backlight unit 120 for display device capable of improving color expression and/or brightness may be provided.

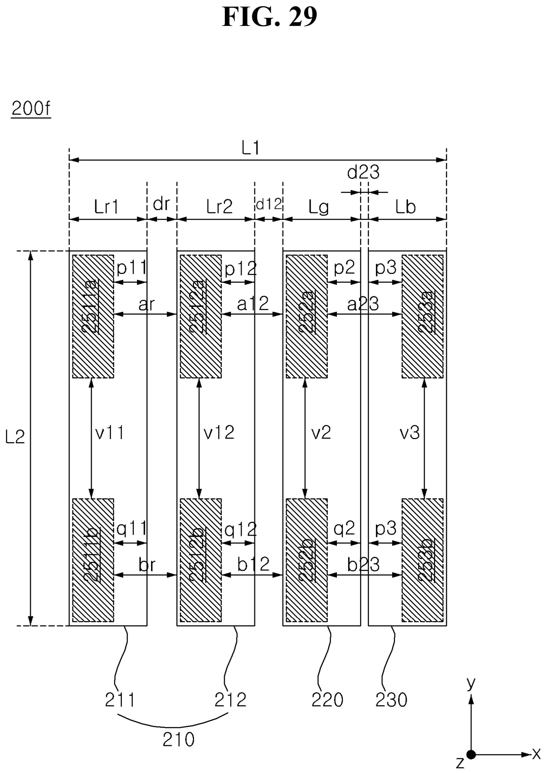

Referring to FIG. 29 together with FIG. 27, a pair of first electrode pads 2511a, 2511b may be spaced apart from the other lateral side of the first red light emitting diode 211. The pair of first electrode pads 2511a, 2511b may be adjacent to one lateral side of the first red light emitting diode 211. For example, a gap p11, q11 between the pair of first electrode pads 2511a, 2511b and the other lateral side of the first red light emitting diode 211 may be greater than or equal to about 50 micrometers.

Another pair of first electrode pads 2512a, 2512b may be spaced apart from one lateral side of the second red light emitting diode 212. Another pair of first electrode pads 2512a, 2512b may be adjacent to the other lateral side of the second red light emitting diode 212. For example, the gap p12, q12 between another pair of first electrode pads 2512a, 2512b and one lateral side of the second red light emitting diode 212 may be greater than or equal to about 50 micrometers. The other lateral side of the second red light emitting diode 212 may be adjacent to the other lateral side of the first red light emitting diode 211.

One pair of first electrode pads 2511a, 2511b and another pair of first electrode pads 2512a, 2512b may be further spaced apart. For example, the gap ar, br between one pair of first electrode pads 2511a, 2511b and another pair of first electrode pads 2512a, 2512b may be greater than or equal to about 100 micrometers.

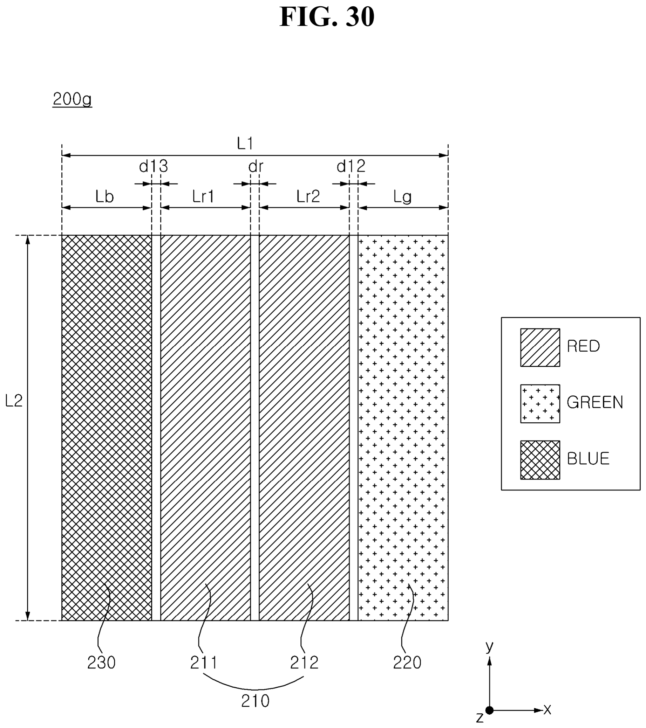

Referring to FIG. 30, a red light emitting diode 210 may be provided between green and blue light emitting diodes 220, 230. The first and second red light emitting diodes 211, 212 may be provided between green and blue light emitting diodes 220, 230. For example, the blue light emitting diode 230, the first and second red light emitting diodes 211, 212, and the blue light emitting diode 230 may be arranged sequentially.

The first and second red light emitting diodes 211, 212 may be adjacent to each other. The first and second red light emitting diodes 211, 212 may be arranged continuously. The first and second red light emitting diodes 211, 212 may be spaced apart from each other. The first and second red light emitting diodes 211, 212 may be spaced apart from each other in the arrangement direction. For example, the gap dr between the first and second red light emitting diodes 211, 212 may be less than or equal to about 50 micrometers.

The blue light emitting diode 230 and the red light emitting diode 210 may be spaced apart from each other. The gap d13 between the blue light emitting diode 230 and the first red light emitting diode 211 may be less than or equal to about 50 micrometers.

The green light emitting diode 220 and the red light emitting diode 210 may be spaced apart from each other. The gap d12 between the green light emitting diode 220 and the second red light emitting diode 212 may be less than or equal to about 50 micrometers.

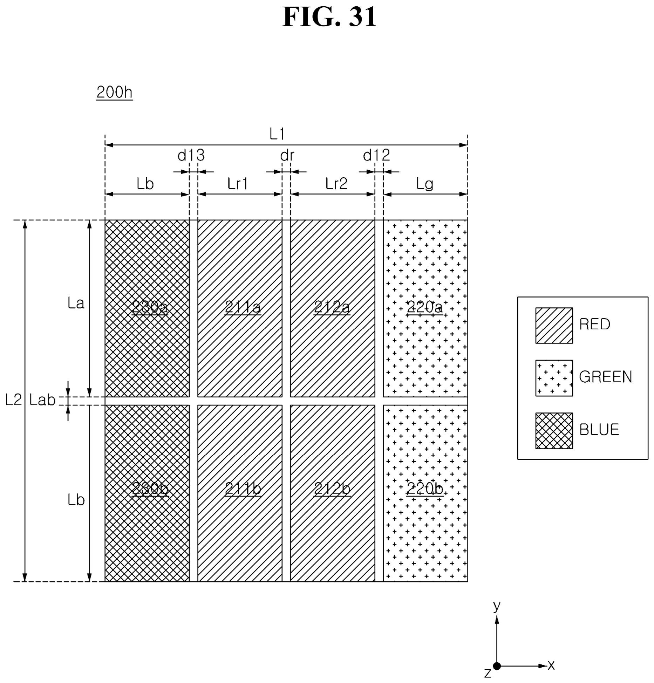

Referring to FIGS. 30 and 31, each of the light emitting diodes 210, 220, 230 may be provided in multiples. The first red light emitting diode 211 may be replaced with a pair of first red light emitting diodes 211a, 211b. The pair of first red light emitting diodes 211a, 211b may extend in the length direction of the light source 200h, and may be spaced apart from each other. The gap (Lab) between the pair of first red light emitting diodes 211a, 211b may be less than or equal to about 50 micrometers.

The second red light emitting diode 212 may be replaced with a pair of second red light emitting diodes 212a, 212b. The pair of second red light emitting diodes 212a, 212b may extend in the length direction of the light source 200, and be spaced apart from each other. The gap (Lab) between the pair of second red light emitting diodes 212a, 212b may be less than or equal to about 50 micrometers.

The blue light emitting diode 230 may be replaced with a pair of blue light emitting diodes 230a, 230b. A pair of blue light emitting diodes 230a, 230b may extend in the length direction of the light source 200h, and be spaced apart from each other. The gap (Lab) between the pair of blue light emitting diodes 230a, 230b may be less than or equal to about 50 micrometers.

The green light emitting diode 220 may be replaced with a pair of green light emitting diodes 220a, 220b. The pair of green light emitting diodes 220a, 220b may extend in the length direction of the light source 200h, and be spaced apart from each other. The gap (Lab) between the pair of green light emitting diodes 220a, 220b may be less than or equal to about 50 micrometers.

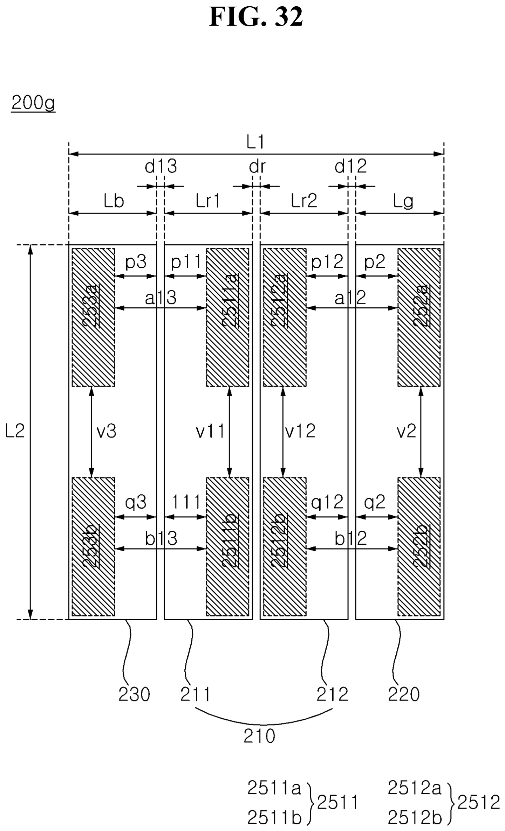

Referring to FIG. 32 together with FIG. 30, a pair of first electrode pads 2511a, 2511b may be provided below the first red light emitting diode 211. Another pair of first electrode pads 2512a, 2512b may be provided below the second red light emitting diode 212.

The pair of first electrode pads 2511a, 2511b may completely overlap with the first red light emitting diode 211 in a planar view. For example, the pair of first electrode pads 2511a, 2511b may be located inside the rim of the first red light emitting diode 211 in a planar view.

Another pair of first electrode pads 2512a, 2512b may completely overlap with the second red light emitting diode 212 in a planar view. For example, another pair of first electrode pads 2512a, 2512b may be located inside the rim of the second red light emitting diode 212 in a planar view.

The pair of first electrode pads 2511a, 2511b may be spaced apart from one lateral side of the first red light emitting diode 211. The pair of first electrode pads 2511a, 2511b may be adjacent to the other lateral side of the first red light emitting diode 211. For example, the gap p11, q11 between the pair of first electrode pads 2511a, 2511b and one lateral side of the first red light emitting diode 211 may be greater than or equal to about 50 micrometers.

Another pair of first electrode pads 2512a, 2512b may be spaced apart from one lateral side of the second red light emitting diode 212. Another pair of first electrode pads 2512a, 2512b may be adjacent to the other lateral side of the second red light emitting diode 212. For example, the gap p12, q12 between another pair of first electrode pads 2512a, 2512b and one lateral side of the second red light emitting diode 212 may be greater than or equal to about 50 micrometers. The other lateral side of the second red light emitting diode 212 may be adjacent to the other lateral side of the first red light emitting diode 211.

A pair of first electrode pads 2511a, 2511b and another pair of first electrode pads 2512a, 2512b may be spaced apart from each other. For example, a gap between the pair of first electrode pads 2511a, 2511b and another pair of first electrode pads 2512a, 2512b may be less than or equal to about 100 micrometers. A gap between the pair of first electrode pads 2511a, 2511b and another pair of first electrode pads 2512a, 2512b may be greater than a gap dr between the first and second red light emitting diodes 211, 212.

A pair of second electrode pads 252a, 252b may be provided below the green light emitting diode 220. The pair of second electrode pads 252a, 252b may completely overlap with the green light emitting diode 220 in a planar view. For example, the pair of second electrode pads 252a, 252b may be located inside the rim of the green light emitting diode 220 in a planar view.

The second electrode pad 252 may be spaced apart from one lateral side of the green light emitting diode 220. The second electrode pad 252 may be adjacent to the other lateral side of the green light emitting diode 220. The other lateral side of the green light emitting diode 220 may be opposite to the one lateral side. For example, a gap p2, q2 between the second electrode pad 252 and one lateral side of the green light emitting diode 220 may be greater than or equal to about 50 micrometers. One lateral side of the green light emitting diode 220 may be adjacent to one lateral side of the second red light emitting diode 212 in a planar view.

In addition, the second electrode pads 252a, 252b may be spaced apart from another pair of first electrode pads 2512a, 2512b. For example, the second electrode pads 252a, 252b may be spaced apart from another pair of first electrode pads 2512a, 2512b in the width direction of the light source 200g. The gap a12, b12 between another pair of first electrode pads 2512a, 2512b and the second electrode pads 252a, 252b may be greater than or equal to about 100 micrometers.

A pair of third electrode pads 253a, 253b may be provided below the blue light emitting diode 230. The pair of third electrode pads 253a, 253b may completely overlap with the blue light emitting diode 230 in a planar view. For example, the pair of third electrode pads 253a, 253b may be located inside the rim of the blue light emitting diode 230 in a planar view.

The third electrode pad 253 may be spaced apart from one lateral side of the blue light emitting diode 230. The third electrode pad 253 may be adjacent to the other lateral side of the blue light emitting diode 230. The other lateral side of the blue light emitting diode 230 may face one lateral side. The one lateral side of the blue light emitting diode 230 may be adjacent to one lateral side of the first red light emitting diode 211. For example, the gap p3, q3 between the third electrode pad 253 and one lateral side of the blue light emitting diode 230 may be greater than or equal to about 50 micrometers.

In addition, the third electrode pads 253a, 253b may be spaced apart from the pair of first electrode pads 2511a, 2511b. For example, the third electrode pads 253a, 253b may be spaced apart from the pair of first electrode pads 2511a, 2511b in the width direction of the light source 200g. The gap a13, b13 between the pair of first electrode pads 2511a, 2511b and the third electrode pads 253a, 253b may be greater than or equal to about 100 micrometers.

Accordingly, the first to third electrode pads 2511, 2512, 252, 253 may be sufficiently spaced apart from each other. For example, the gap a12, b12 between the first and second electrode pads 2512, 252 may be greater than or equal to about 100 micrometers. The gap a13, b13 between the first and third electrode pads 2511, 253 may be greater than or equal to about 100 micrometers. Accordingly, the first to third electrode pads 2511, 2512, 252, 253 may not be electrically connected to each other.

In addition, the red, green, and blue light emitting diodes 210, 220, 230 may receive currents having different magnitudes.

In addition, the currents applied to the red, green, and blue light emitting diodes 210, 220, 230 may be independently controlled.

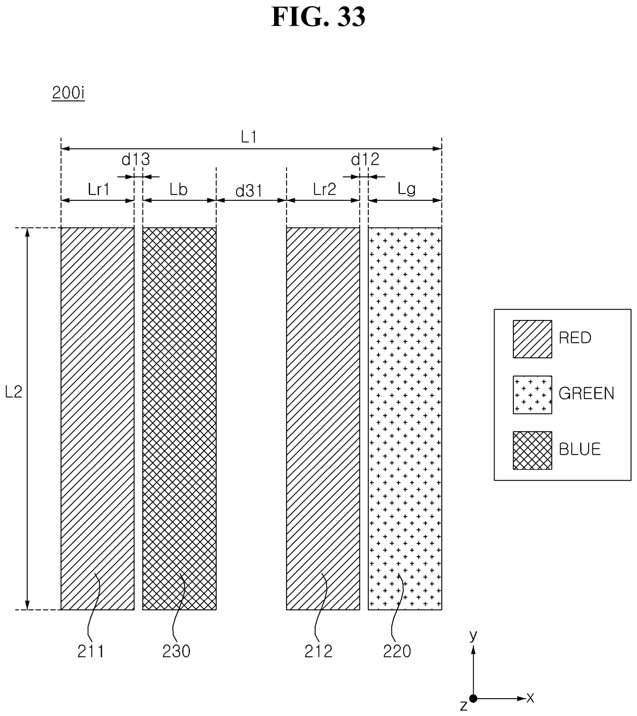

Referring to FIGS. 33 to 35, the first and second red light emitting diodes 211, 212 may not be arranged continuously. The blue or green light emitting diode 220, 230 may be arranged between the first and second red light emitting diodes 211, 212. For example, the first red light emitting diode 211, the blue light emitting diode 230, the second red light emitting diode 212, and the green light emitting diode 220 may be arranged sequentially. Alternatively, the first red light emitting diode 211, the green light emitting diode 220, the second red light emitting diode 212, and the blue light emitting diode 230 may be arranged sequentially.

The blue light emitting diode 230 may be disposed between the first and second red light emitting diodes 211, 212. The blue light emitting diode 230 may be adjacent to the first red light emitting diode 211. The blue light emitting diode 230 may be spaced apart from the first red light emitting diode 211. For example, the gap d13 between the blue light emitting diode 230 and the first red light emitting diode 211 may be less than or equal to about 50 micrometers.

The blue light emitting diode 230 may be adjacent to the second red light emitting diode 212. The blue light emitting diode 230 may be spaced apart from the second red light emitting diode 212. For example, the gap d31 between the blue light emitting diode 230 and the second red light emitting diode 212 may be greater than or equal to about 100 micrometers. The gap d31 between the blue light emitting diode 230 and the second red light emitting diode 212 may be greater than the gap d13 between the blue light emitting diode 230 and the first red light emitting diode 211.

The green light emitting diode 220 may be adjacent to the second red light emitting diode 212. The green light emitting diode 220 may be spaced apart from the second red light emitting diode 212. For example, the gap d12 between the green light emitting diode 220 and the second red light emitting diode 212 may be less than or equal to about 50 micrometers.

In one embodiment, each of the light emitting diodes 210, 220, 230 may be provided in multiples. The first red light emitting diode 211 may be replaced with a pair of first red light emitting diodes 211a, 211b. The pair of first red light emitting diodes 211a, 211b may extend in the length direction of the light source 200, and be spaced apart from each other. The gap Lab between the pair of first red light emitting diodes 211a, 211b may be less than or equal to about 50 micrometers.

The second red light emitting diode 212 may be replaced with a pair of second red light emitting diodes 212a, 212b. The pair of second red light emitting diodes 212a, 212b may extend in the length direction of the light source 200, and be spaced apart from each other. The gap (Lab) between the pair of second red light emitting diodes 212a, 212b may be less than or equal to about 50 micrometers.

The blue light emitting diode 230 may be replaced with a pair of blue light emitting diodes 230a, 230b. The pair of blue light emitting diodes 230a, 230b may extend in the length direction of the light source 200, and be spaced apart from each other. The gap (Lab) between the pair of blue light emitting diodes 230a, 230b may be less than or equal to about 50 micrometers.

The green light emitting diode 220 may be replaced with a pair of green light emitting diodes 220a, 220b. The pair of green light emitting diodes 220a, 220b may extend in the length direction of the light source 200, and be spaced apart from each other. The gap (Lab) between the pair of green light emitting diodes 220a, 220b may be less than or equal to about 50 micrometers.

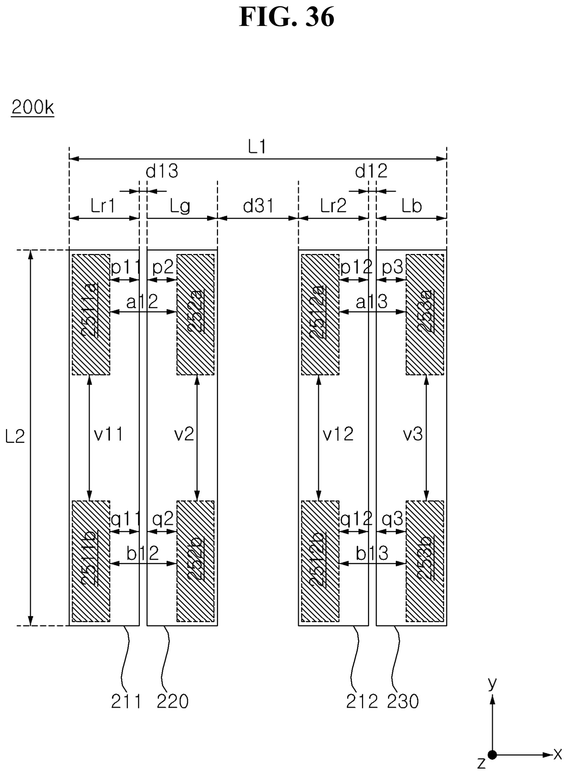

Referring to FIG. 36 together with FIG. 33, a pair of first electrode pads 2511a, 2511b may be provided below the first red light emitting diode 211. Another pair of first electrode pads 2512a, 2512b may be provided below the second red light emitting diode 212.

The pair of first electrode pads 2511a, 2511b may completely overlap with the first red light emitting diode 211 in a planar view. For example, the pair of first electrode pads 2511a, 2511b may be located inside the rim of the first red light emitting diode 211 in a planar view.

Another pair of first electrode pads 2512a, 2512b may completely overlap with the second red light emitting diode 212 in a planar view. For example, another pair of first electrode pads 2512a, 2512b may be located inside the rim of the second red light emitting diode 212 in a planar view.

The pair of first electrode pads 2511a, 2511b may be spaced apart from one lateral side of the first red light emitting diode 211. The pair of first electrode pads 2511a, 2511b may be adjacent to the other lateral side of the first red light emitting diode 211. For example, the gap p11, q11 between the pair of first electrode pads 2511a, 2511b and one lateral side of the first red light emitting diode 211 may be greater than or equal to about 50 micrometers.

Another pair of first electrode pads 2512a, 2512b may be spaced apart from one lateral side of the second red light emitting diode 212. Another pair of first electrode pads 2512a, 2512b may be adjacent to the other lateral side of the second red light emitting diode 212. For example, the gap p12, q12 between another pair of first electrode pads 2512a, 2512b and one lateral side of the second red light emitting diode 212 may be greater than or equal to about 50 micrometers. The other lateral side of the second red light emitting diode 212 may be adjacent to the other lateral side of the first red light emitting diode 211.

A pair of second electrode pads 252a, 252b may be provided below the green light emitting diode 220. The pair of second electrode pads 252a, 252b may completely overlap with the green light emitting diode 220 in a planar view. For example, the pair of second electrode pads 252a, 252b may be located inside the rim of the green light emitting diode 220 in a planar view.

The second electrode pad 252 may be spaced apart from one lateral side of the green light emitting diode 220. The second electrode pad 252 may be adjacent to the other lateral side of the green light emitting diode 220. The other lateral side of the green light emitting diode 220 may face one lateral side. For example, the gap p2, q2 between the second electrode pad 252 and the one lateral side of the green light emitting diode 220 may be greater than or equal to about 50 micrometers. The one lateral side of the green light emitting diode 220 may be adjacent to one lateral side of the first red light emitting diode 211.

In addition, the second electrode pads 252a, 252b may be spaced apart from a pair of first electrode pads 2511a, 2511b. For example, the second electrode pads 252a, 252b may be spaced apart from the pair of first electrode pads 2511a, 2511b in the width direction of the light source 200k. The gap a12, b12 between the pair of first electrode pads 2511a, 2511b and the second electrode pads 252a, 252b may be greater than or equal to about 100 micrometers.

A pair of third electrode pads 253a, 253b may be provided below the blue light emitting diode 230. The pair of third electrode pads 253a, 253b may completely overlap with the blue light emitting diode 230 in a planar view. For example, the pair of third electrode pads 253a, 253b may be located inside the rim of the blue light emitting diode 230 in a planar view.

The third electrode pad 253 may be spaced apart from one lateral side of the blue light emitting diode 230. The third electrode pad 253 may be adjacent to the other lateral side of the blue light emitting diode 230. The other lateral side of the blue light emitting diode 230 may be opposite to one lateral side. For example, the gap p3, q3 between the third electrode pad 253 and the one lateral side of the blue light emitting diode 230 may be greater than or equal to about 50 micrometers. The one lateral side of the blue light emitting diode 230 may be adjacent to one lateral side of the second red light emitting diode 212.

In addition, the third electrode pads 253a, 253b may be spaced apart from another pair of first electrode pads 2512a, 2512b. For example, the third electrode pads 253a, 253b may be spaced apart from another pair of first electrode pads 2512a, 2512b in the width direction of the light source 200k. The gap a13, b13 between another pair of first electrode pads 2512a, 2512b and the third electrode pads 253a, 2523 may be greater than or equal to about 100 micrometers.

Accordingly, the first to third electrode pads 2511, 2512, 252, 253 may be sufficiently spaced apart from each other. For example, the gap a12, b12 between a pair of first electrode pads 2511a, 2511b and second electrode pads 252a, 252b may be greater than or equal to about 100 micrometers. The gap a13, b13 between another pair of first electrode pads 2512a, 2512b and third electrode pads 253a, 253b may be greater than or equal to about 100 micrometers. Accordingly, the first to third electrode pads 251, 252, 253 may not be electrically connected to each other.

In addition, the red, green, and blue light emitting diodes 210, 220, 230 may receive currents having different magnitudes.

In addition, the currents applied to the red, green, and blue light emitting diodes 210, 220, 230 may be independently controlled.

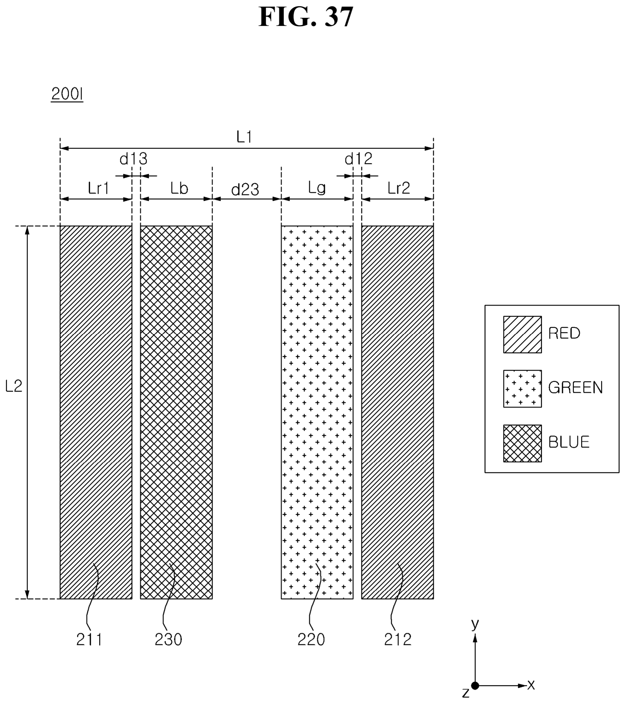

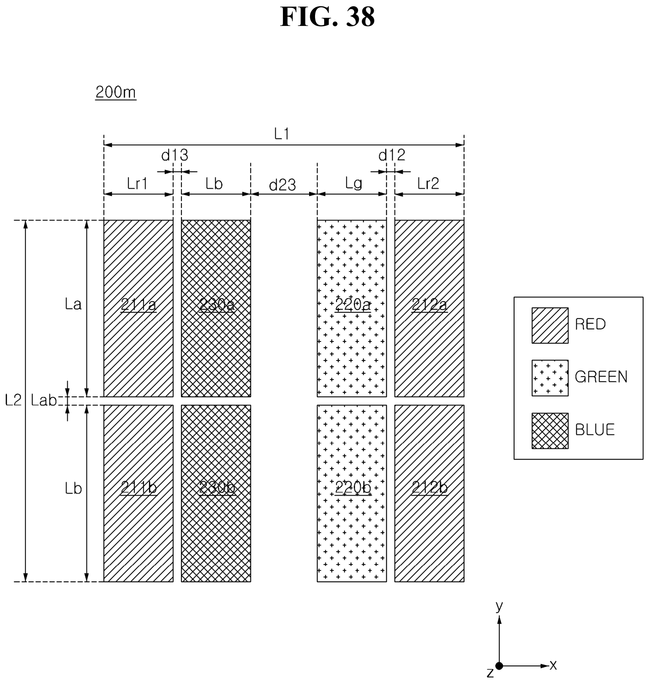

Referring to FIGS. 37 and 38, the blue and green light emitting diodes 230, 220 may be arranged between the first and second red light emitting diodes 211, 212. For example, the first red light emitting diode 211, the blue light emitting diode 230, the green light emitting diode 220, and the second red light emitting diode 212 may be arranged sequentially.

Accordingly, the red light emitting diodes 211, 212, which have the highest temperature sensitivity, may be spaced apart from the center of the light source 2001 where heat is concentrated. Thus, performance degradation of the red light emitting diodes 211, 212 due to temperature increase may be minimized.

In addition, the blue light emitting diode 230, which has little temperature sensitivity, may be disposed at the center of the light source 2001 where heat can be concentrated.

In addition, heat generated from the red light emitting diodes 211, 212 may be smoothly dissipated.

In addition, the white light implementation performance of the light source 2001 may be improved.

In addition, the operating temperature of the light source 2001 may be lowered.

In addition, a backlight unit 120 for display device capable of improving color expression and/or brightness may be provided.

The blue light emitting diode 230 may be disposed between the first red light emitting diode 211 and the green light emitting diode 220. The blue light emitting diode 230 may be adjacent to the first red light emitting diode 211. The blue light emitting diode 230 may be spaced apart from the first red light emitting diode 211. For example, the gap d13 between the blue light emitting diode 230 and the first red light emitting diode 211 may be less than or equal to about 50 micrometers.

The blue light emitting diode 230 may be adjacent to the green light emitting diode 220. The blue light emitting diode 230 may be spaced apart from the green light emitting diode 220. For example, the gap d23 between the blue light emitting diode 230 and the green light emitting diode 220 may be greater than or equal to about 100 micrometers. The gap d23 between the blue light emitting diode 230 and the green light emitting diode may be greater than the gap d13 between the blue light emitting diode 230 and the first red light emitting diode 211.

The green light emitting diode 220 may be disposed between the second red light emitting diode 212 and the blue light emitting diode 230. The green light emitting diode 220 may be adjacent to the second red light emitting diode 212. The green light emitting diode 220 may be spaced apart from the second red light emitting diode 212. For example, the gap d12 between the green light emitting diode 220 and the second red light emitting diode 212 may be less than or equal to about 50 micrometers.

In one embodiment, each of the light emitting diodes 210, 220, 230 may be provided in multiples. The first red light emitting diode 211 may be replaced with a pair of first red light emitting diodes 211a, 211b. The pair of first red light emitting diodes 211a, 211b may extend in the length direction of the light source 200m, and may be spaced apart from each other. The gap (Lab) between the pair of first red light emitting diodes 211a, 211b may be less than or equal to about 50 micrometers.

The second red light emitting diode 212 may be replaced with a pair of second red light emitting diodes 212a, 212b. The pair of second red light emitting diodes 212a, 212b may extend in the length direction of the light source 200m, and be spaced apart from each other. The gap (Lab) between the pair of second red light emitting diodes 212a, 212b may be less than or equal to about 50 micrometers.

The blue light emitting diode 230 may be replaced with a pair of blue light emitting diodes 230a, 230b. The pair of blue light emitting diodes 230a, 230b may extend in the length direction of the light source 200m, and be spaced apart from each other. The gap (Lab) between the pair of blue light emitting diodes 230a, 230b may be less than or equal to about 50 micrometers.

The green light emitting diode 220 may be replaced with a pair of green light emitting diodes 220a, 220b. The pair of green light emitting diodes 220a, 220b may extend in the length direction of the light source 200m, and be spaced apart from each other. The gap (Lab) between the pair of green light emitting diodes 220a, 220b may be less than or equal to about 50 micrometers.

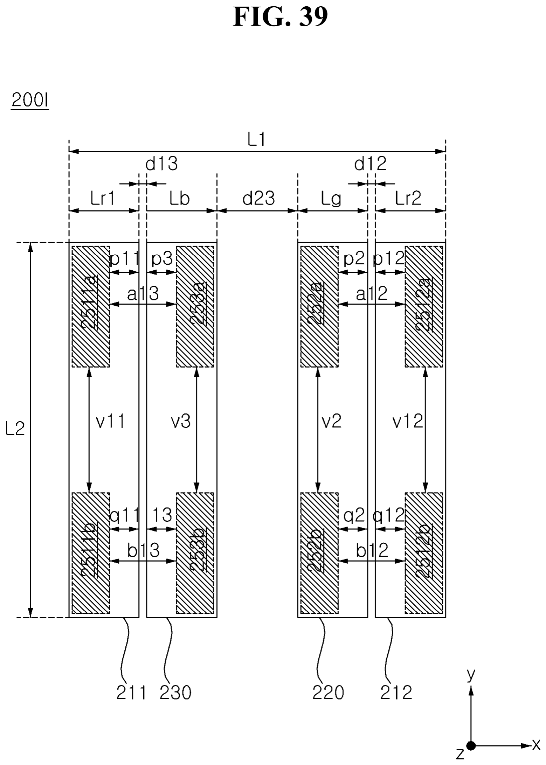

Referring to FIG. 39 together with FIG. 37, a pair of first electrode pads 2511a, 2511b may be provided below the first red light emitting diode 211. Another pair of first electrode pads 2512a, 2512b may be provided below the second red light emitting diode 212.

The pair of first electrode pads 2511a, 2511b may completely overlap with the first red light emitting diode 211 in a planar view. For example, the pair of first electrode pads 2511a, 2511b may be located inside the rim of the first red light emitting diode 211 in a planar view.

Another pair of first electrode pads 2512a, 2512b may completely overlap with the second red light emitting diode 212 in a planar view. For example, another pair of first electrode pads 2512a, 2512b may be located inside the rim of the second red light emitting diode 212 in a planar view.

A pair of first electrode pads 2511a, 2511b may be spaced apart from one lateral side of the first red light emitting diode 211. The pair of first electrode pads 2511a, 2511b may be adjacent to the other lateral side of the first red light emitting diode 211. For example, the gap p11, q11 between the pair of first electrode pads 2511a, 2511b and the one lateral side of the first red light emitting diode 211 may be greater than or equal to about 50 micrometers.

Another pair of first electrode pads 2512a, 2512b may be spaced apart from one lateral side of the second red light emitting diode 212. Another pair of first electrode pads 2512a, 2512b may be adjacent to the other lateral side of the second red light emitting diode 212. For example, the gap p12, q12 between another pair of first electrode pads 2512a, 2512b and one lateral side of the second red light emitting diode 212 may be greater than or equal to about 50 micrometers.

The second pair of electrode pads 252a, 252b may be provided below the green light emitting diode 220. The second pair of electrode pads 252a, 252b may completely overlap with the green light emitting diode 220 in a planar view. For example, the second pair of electrode pads 252a, 252b may be located inside the rim of the green light emitting diode 220 in a planar view.

The second electrode pad 252 may be spaced apart from one lateral side of the green light emitting diode 220. The second electrode pad 252 may be adjacent to the other lateral side of the green light emitting diode 220. The other lateral side of the green light emitting diode 220 may face one lateral side. For example, the gap p2, q2 between the second electrode pad 252 and the one lateral side of the green light emitting diode 220 may be greater than or equal to about 50 micrometers. The one lateral side of the green light emitting diode 220 may be adjacent to one lateral side of the second red light emitting diode 212.

In addition, the second electrode pads 252a, 252b may be spaced apart from another pair of first electrode pads 2512a, 2512b. For example, the second electrode pads 252a, 252b may be spaced apart from another pair of first electrode pads 2512a, 2512b in the width direction of the light source 2001. The gap a12, b12 between another pair of first electrode pads 2512a, 2512b and the second electrode pads 252a, 252b may be greater than or equal to about 100 micrometers.

A pair of third electrode pads 253a, 253b may be provided below the blue light emitting diode 230. The pair of third electrode pads 253a, 253b may completely overlap with the blue light emitting diode 230 in a planar view. For example, a pair of third electrode pads 253a, 253b may be located inside the rim of the blue light emitting diode 230 in a planar view.

The third electrode pad 253 may be spaced apart from one lateral side of the blue light emitting diode 230. The third electrode pad 253 may be adjacent to the other lateral side of the blue light emitting diode 230. The other lateral side of the blue light emitting diode 230 may be opposite to the one lateral side. For example, the gap p3, q3 between the third electrode pad 253 and the one lateral side of the blue light emitting diode 230 may be greater than or equal to about 50 micrometers. The one lateral side of the blue light emitting diode 230 may be adjacent to one lateral side of the first red light emitting diode 211.

In addition, the third electrode pads 253a, 253b may be spaced apart from the pair of first electrode pads 2511a, 2511b. For example, the third electrode pads 253a, 253b may be spaced apart from the pair of first electrode pads 2511a, 2511b in the width direction of the light source 2001. The gap a13, b13 between the pair of first electrode pads 2511a, 2511b and the third electrode pads 253a, 253b may be greater than or equal to about 100 micrometers.

In addition, the third electrode pad 253 may be spaced apart from the second electrode pad 252. For example, the third electrode pad 253 may be spaced apart from the second electrode pad 252 in the width direction of the light source 2001. The gap d23 between the third electrode pad 253 and the second electrode pad 252 may be greater than or equal to about 100 micrometers.

Accordingly, the first to third electrode pads 2511, 2512, 252, 253 may be sufficiently spaced apart from each other. For example, the gap a12, b12 between another pair of first electrode pads 2512a, 2512b and second electrode pads 252a, 252b may be greater than or equal to about 100 micrometers. The gap a13, b13 between a pair of first electrode pads 2511a, 2511b and third electrode pads 253a, 253b may be greater than or equal to about 100 micrometers. Therefore, the first to third electrode pads 2511, 2512, 252, 253 may not be electrically connected to each other.

In addition, the red, green, and blue light emitting diodes 210, 220, 230 may receive currents of different magnitudes.

In addition, the currents applied to the red, green, and blue light emitting diodes 210, 220, 230 may be independently controlled.

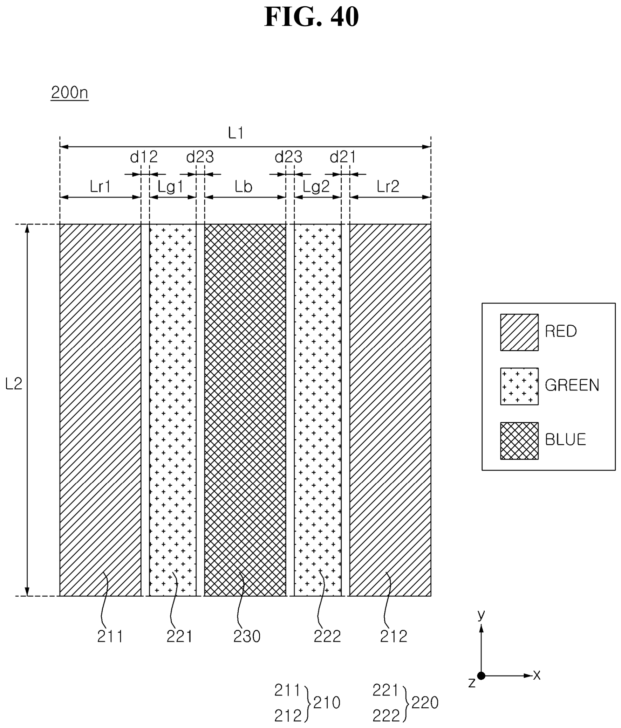

Referring to FIG. 40, the red light emitting diode 210 may include a first red light emitting diode 211 and a second red light emitting diode 212. Similarly, the green light emitting diode 220 may include a first green light emitting diode 221 and a second green light emitting diode 222.

The first and second green light emitting diodes 221, 222 may extend. For example, the first and second green light emitting diodes 221, 222 may extend in the length direction of the light source 200n.

The lengths L2 of the first and second green light emitting diodes 221, 222 may be substantially the same. For example, the lengths L2 of the first and second green light emitting diodes 221, 222 may be substantially the same as the length L2 of the light source 200n.

The widths Lg1, Lg2 of the first and second green light emitting diodes 221, 222 may be substantially the same. The widths Lg1, Lg2 of the first and second green light emitting diodes 221, 222 may be measured in the width direction of the light source 200n.

The light-emitting areas of the first and second green light emitting diodes 221, 222 may be substantially the same. For example, since the lengths L2 and widths Lg1, Lg2 of the first and second green light emitting diodes 221, 222 are substantially the same, the light-emitting area of the first and second green light emitting diodes 221, 222 may be substantially the same.

The light-emitting area of the first or second green light emitting diodes 221, 222 may be smaller than the light-emitting area of the blue light emitting diode 230. The sum of the light-emitting areas of the first and second green light emitting diodes 221, 222 may be substantially the same as the light-emitting area of the blue light emitting diode 230.

The first and second green light emitting diodes 221, 222 may be provided between the first and second red light emitting diodes 211, 212. The blue light emitting diode 230 may be provided between the first and second green light emitting diodes 221, 222. For example, the first red light emitting diode 211, the first green light emitting diode 221, the blue light emitting diode 230, the second green light emitting diode 222, and the second red light emitting diode 212 may be arranged sequentially.

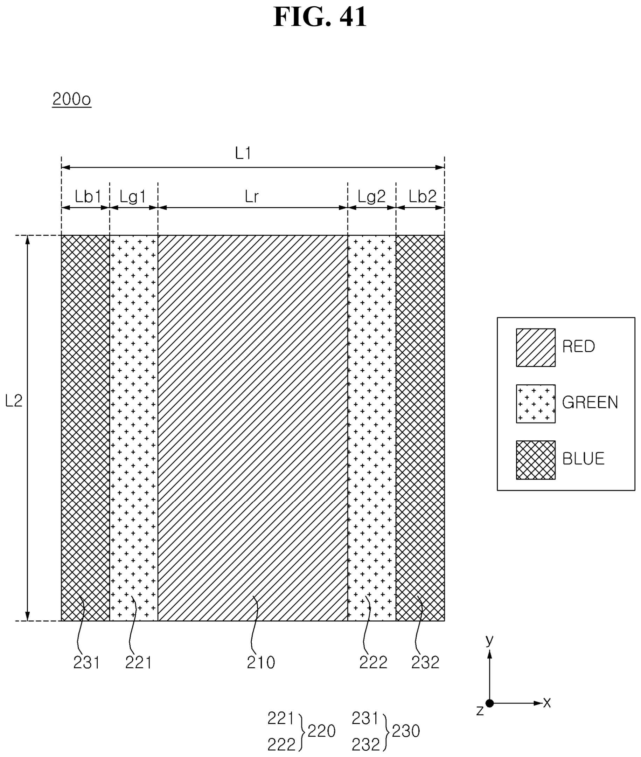

Referring to FIG. 41, the blue light emitting diode 230 may include a first blue light emitting diode 231 and a second blue light emitting diode 232. The first and second blue light emitting diodes 231, 232 may extend. For example, the first and second blue light emitting diodes 231, 232 may extend in the length direction of the light source 200o.

The lengths L2 of the first and second blue light emitting diodes 231, 232 may be substantially the same. For example, the lengths L2 of the first and second blue light emitting diodes 231, 232 may be substantially the same as the length L2 of the light source 200.

The widths Lb1, Lb2 of the first and second blue light emitting diodes 231, 232 may be substantially the same. The widths Lb1, Lb2 of the first and second blue light emitting diodes 231, 232 may be measured in the width direction of the light source 200o.

The light-emitting areas of the first and second blue light emitting diodes 231, 232 may be substantially the same. For example, since the lengths L2 and widths Lb1, Lb2 of the first and second blue light emitting diodes 231, 232 are substantially the same, the light-emitting areas of the first and second blue light emitting diodes 231, 232 may be substantially the same.

The light-emitting area of the first or second blue light emitting diodes 231, 232 may be substantially the same as the light-emitting area of the first or second green light emitting diode 222.

The first and second green light emitting diodes 221, 222 may be provided between the first and second blue light emitting diodes 231, 232. The red light emitting diode 210 may be provided between the first and second green light emitting diodes 221, 222. For example, the first blue light emitting diode 230, the first green light emitting diode 221, the red light emitting diode 210, the second green light emitting diode 222, and the second blue light emitting diode 232 may be arranged sequentially.

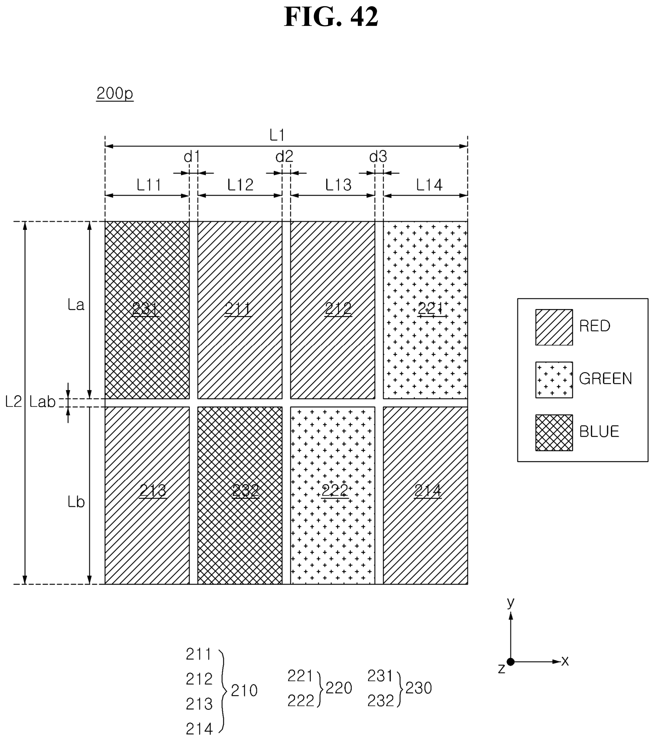

Referring to FIG. 42, in one embodiment, the red light emitting diode 210 may include first to fourth red light emitting diodes 211, 212, 213, 214. The first to fourth red light emitting diodes 211, 212, 213, 214 may extend. For example, the first to fourth red light emitting diodes 211, 212, 213, 214 may extend in the length direction of the light source 200p. The lengths La, Lb of the first to fourth red light emitting diodes 211, 212, 213, 214 may be substantially the same. However, the lengths La, Lb of the first to fourth red light emitting diodes 211, 212, 213, 214 may be smaller than the length L2 of the light source 200p.

The widths L12, L13, L11, L14 of the first to fourth red light emitting diodes 211, 212, 213, 214 may be substantially the same. The widths L12, L13, L11, L14 of the first to fourth red light emitting diodes 211, 212, 213, 214 may be measured in the width direction of the light source 200p.

The light-emitting areas of the first to fourth red light emitting diodes 211, 212, 213, 214 may be substantially the same. For example, since the lengths La, Lb and widths L12, L13, L11, L14 of the first to fourth red light emitting diodes 211, 212, 213, 214 are substantially the same, the light-emitting area of the first to fourth red light emitting diodes 211, 212, 213, 214 may be substantially the same.

The green light emitting diode 220 may include a first green light emitting diode 221 and a second green light emitting diode 222. The first and second green light emitting diodes 221, 222 may extend. For example, the first and second green light emitting diodes 221, 222 may extend in the length direction of the light source 200. The lengths La, Lb of the first and second green light emitting diodes 221, 222 may be substantially the same. However, the lengths La, Lb of the first and second green light emitting diodes 221, 222 may be smaller than the length L2 of the light source 200p.

The widths L14, L13 of the first and second green light emitting diodes 221, 222 may be substantially the same. The widths L14, L13 of the first and second green light emitting diodes 221, 222 may be measured in the width direction of the light source 200p.

The light-emitting areas of the first and second green light emitting diodes 221, 222 may be substantially the same. For example, since the lengths La, Lb and widths L14, L13 of the first and second green light emitting diodes 221, 222 are substantially the same, the light-emitting area of the first and second green light emitting diodes 221, 222 may be substantially the same.

Similarly, the blue light emitting diode 230 may include a first blue light emitting diode 230 and a second blue light emitting diode 232. The first and second blue light emitting diodes 231, 232 may extend. For example, the first and second blue light emitting diodes 231, 232 may extend in the length direction of the light source 200. The lengths La, Lb of the first and second blue light emitting diodes 231, 232 may be substantially the same. However, the lengths La, Lb of the first and second blue light emitting diodes 231, 232 may be smaller than the length L2 of the light source 200p.

The widths L11, L12 of the first and second blue light emitting diodes 231, 232 may be substantially the same. The widths L11, L12 of the first and second blue light emitting diodes 231, 232 may be measured in the width direction of the light source 200p.

The light-emitting areas of the first and second blue light emitting diodes 231, 232 may be substantially the same. For example, since the lengths La, Lb and widths L11, L12 of the first and second blue light emitting diodes 231, 232 are substantially the same, the light-emitting area of the first and second blue light emitting diodes 231, 232 may be substantially the same.

The lengths La, Lb of the red, green, and blue light emitting diodes 210, 220, 230 may be the same. The widths L11, L12, L13, L14 of the red, green, and blue light emitting diodes 210, 220, 230 may be the same. The light-emitting areas of the red, green, and blue light emitting diodes 210, 220, 230 may be the same. For example, the red, green, and blue light emitting diodes 210, 220, 230 may be provided with substantially the same structure.

The first to fourth red light emitting diodes 211, 212, 213, 214, the first and second green light emitting diodes 221, 222, and the first and second blue light emitting diodes 231, 232 may be arbitrarily arranged to form a square-shaped light source 200p. For example, the first to fourth red light emitting diodes 211, 212, 213, 214, the first and second green light emitting diodes 221, 222, and the first and second blue light emitting diodes 231, 232 may be arbitrarily arranged, while forming a square-shaped light source 200p.

The first to fourth red light emitting diodes 211, 212, 213, 214, the first and second green light emitting diodes 221, 222, and the first and second blue light emitting diodes 231, 232 may be arranged in a matrix pattern. For example, the first to fourth red light emitting diodes 211, 212, 213, 214, the first and second green light emitting diodes 221, 222, and the first and second blue light emitting diodes 231, 232 may be arranged in a 2x4 matrix pattern.

The first to fourth red light emitting diodes 211, 212, 213, 214, the first and second green light emitting diodes 221, 222, and the first and second blue light emitting diodes 231, 232 may be evenly distributed. For example, the first and second red light emitting diodes 211, 212 may be arranged in a first row of the matrix pattern, and the third and fourth red light emitting diodes 213, 214 may be arranged in a second row of the matrix pattern. In addition, the first green light emitting diode 221 may be arranged in a first row of the matrix pattern, and the second green light emitting diode 222 may be arranged in a second row of the matrix pattern. In addition, the first blue light emitting diode 230 may be arranged in a first row of the matrix pattern, and the second blue light emitting diode 232 may be arranged in a second row of the matrix pattern.

Accordingly, the light-emitting distribution of the red light emitting diode 210, the light-emitting distribution of the green light emitting diode 220, and the light-emitting distribution of the blue light emitting diode 230 may overlap as much as possible.

In addition, the white light implementation performance of the light source 200p may be improved.

In addition, a backlight unit 120 for display device capable of improving color separation may be provided.

In addition, a backlight unit 120 for display device capable of expanding a viewing angle may be provided.

In addition, a backlight unit 120 for display device capable of reducing the size of a light source 200p may be provided.

Specifically, in the first row of the matrix pattern, the first and second red light emitting diodes 211, 212 may be arranged between the first green light emitting diode 221 and the first blue light emitting diode 231. In the second row of the matrix pattern, the second green light emitting diode 222 and the second blue light emitting diode 232 may be arranged between the third and fourth red light emitting diodes 213, 214.

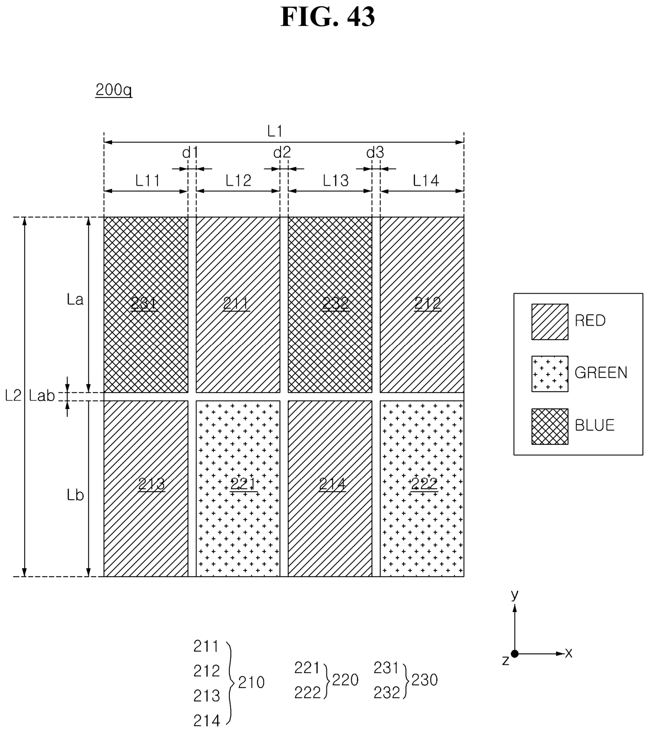

Referring to FIG. 43, in one embodiment, the first and second red light emitting diodes 211, 212 may be arranged in a first row of the matrix pattern, and the third and fourth red light emitting diodes 213, 214 may be arranged in a second row of the matrix pattern. In addition, the first and second blue light emitting diodes 231, 232 may be arranged in a first row of the matrix pattern. In addition, the first and second green light emitting diodes 221, 222 may be arranged in a second row of the matrix pattern.

Specifically, in the first row of the matrix pattern, the first red light emitting diode 211 may be arranged between the first and second blue light emitting diodes 231, 232.

In addition, the second blue light emitting diode 232 may be arranged between the first and second red light emitting diodes 211, 212.

In the second row of the matrix pattern, the first green light emitting diode 221 may be arranged between the third and fourth red light emitting diodes 213, 214.

In addition, the fourth red light emitting diode 214 may be arranged between the first and second green light emitting diodes 221, 222.

Accordingly, the light-emitting distribution of the red light emitting diode 210, the light-emitting distribution of the green light emitting diode 220, and the light-emitting distribution of the blue light emitting diode 230 may overlap as much as possible.

In addition, the white light implementation performance of the light source 200q may be improved.

In addition, a backlight unit 120 for display device capable of improving color separation may be provided.

In addition, a backlight unit 120 for display device capable of expanding the viewing angle may be provided.

In addition, a backlight unit 120 for display device capable of reducing the size of the light source 200q may be provided.

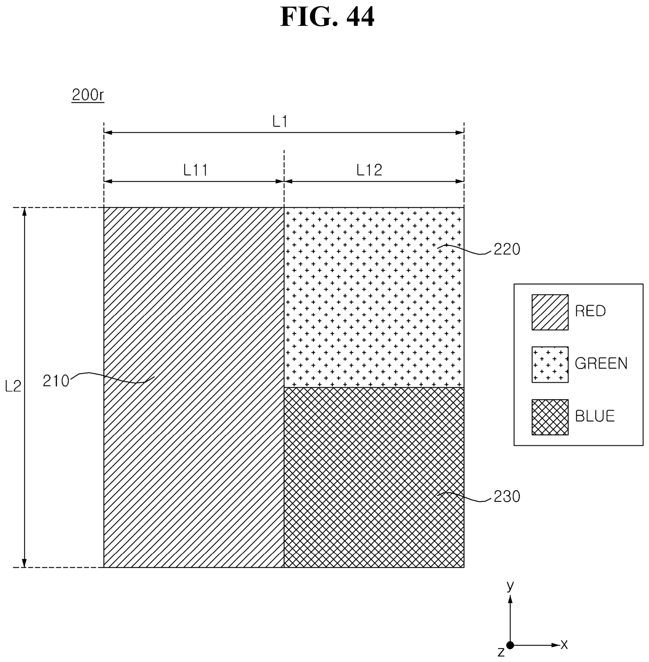

Referring to FIG. 44, the red light emitting diode 210 may extend. For example, the red light emitting diode 210 may have a rectangular shape. The length L2 of the red light emitting diode 210 may correspond to the length L2 of the light source 200r. The width L11 of the red light emitting diode 210 may correspond to half the width L1 of the light source 200r.

The green and blue light emitting diodes 220, 230 may have a substantially square shape. For example, the light-emitting areas of the green and blue light emitting diodes 220, 230 may have a substantially square shape.

The light-emitting areas of the green and blue light emitting diodes 220, 230 may be substantially the same. The light-emitting areas of the green and blue light emitting diodes 220, 230 may be smaller than the light-emitting area of the red light emitting diode 210. For example, the light-emitting area of the red light emitting diode 210 may be about twice the light-emitting area of the green or blue light emitting diode 220, 230. The sum of the light-emitting areas of the green and blue light emitting diodes 220, 230 may be substantially the same as the light-emitting area of the red light emitting diode 210.

The green and blue light emitting diodes 220, 230 may be adjacent to the red light emitting diode 210. The green and blue light emitting diodes 220, 230 may be arranged in the length direction of the light source 200r. The light source 200r may have a substantially square shape. For example, the red, green, and blue light emitting diodes 210, 220, 230 may be arranged within a substantially square-shaped rim.

The red, green, and blue light emitting diodes 210, 220, 230 may be in contact with each other. For example, the red, green, and blue light emitting diodes 210, 220, 230 may be arranged without spacing. Adjacent one sides of the red, green, and blue light emitting diodes 210, 220, 230 may overlap with each other. The light-emitting surfaces of the red, green, and blue light emitting diodes 210, 220, 230 may form a single light-emitting surface.

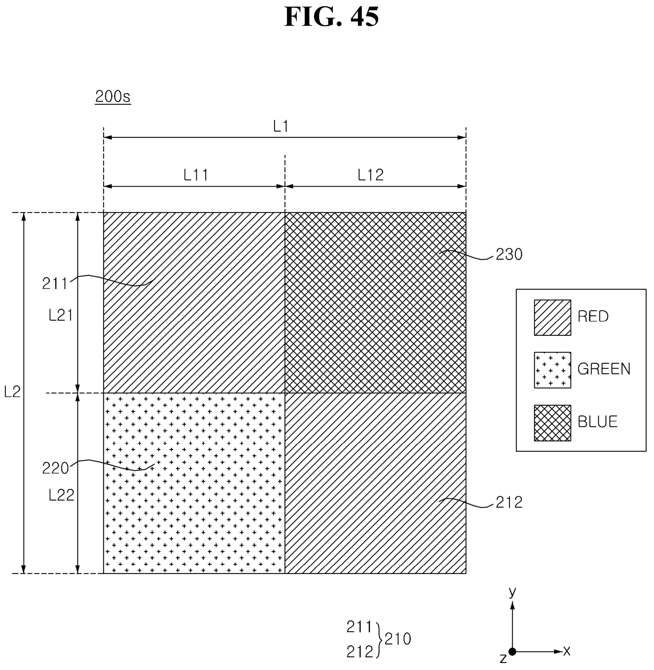

Referring to FIG. 45, in one embodiment, the red light emitting diode 210 may include a first red light emitting diode 211 and a second red light emitting diode 212. The first and second red light emitting diodes 211, 212 may have a substantially square shape.

The lengths L21, L22 of the first and second red light emitting diodes 211, 212 may be substantially the same. The widths L11, L12 of the first and second red light emitting diodes 211, 212 may be substantially the same. The widths L11, L12 of the first and second red light emitting diodes 211, 212 may be measured in the width direction of the light source 200s.

The light-emitting areas of the first and second red light emitting diodes 211, 212 may be substantially the same. For example, since the lengths L21, L22 and widths L11, L12 of the first and second red light emitting diodes 211, 212 are substantially the same, the light-emitting area of the first and second red light emitting diodes 211, 212 may be substantially the same. The light-emitting area of the first or second red light emitting diode 212 may be substantially the same as the light-emitting area of the green or blue light emitting diode 220.

Similarly, the first and second red light emitting diodes 211, 212, and the green and blue light emitting diodes 220, 230 may be adjacent to each other. The light source 200 may have a substantially square shape. For example, the first and second red light emitting diodes 211, 212, and the green and blue light emitting diodes 220, 230 may be arranged within a substantially square-shaped rim.

The first and second red light emitting diodes 211, 212, and the green and blue light emitting diodes 220, 230 may be in contact with each other. For example, the first and second red light emitting diodes 211, 212, and the green and blue light emitting diodes 220, 230 may be arranged without spacing. Adjacent one sides of the first and second red light emitting diodes 211, 212, and the green and blue light emitting diodes 220, 230 may overlap each other. The light-emitting surfaces of the first and second red light emitting diodes 211, 212, and the green and blue light emitting diodes 220, 230 may form a single light-emitting surface.

The first and second red light emitting diodes 211, 212, the green light emitting diode 220, and the blue light emitting diode 230 may be arranged in a matrix pattern. For example, the first and second red light emitting diodes 211, 212, the green light emitting diode 220, and the blue light emitting diode 230 may be arranged in a 2x2 matrix pattern.

The first and second red light emitting diodes 211, 212, the green light emitting diode 220, and the blue light emitting diode 230 may be evenly distributed. For example, the first red light emitting diode 211 and the blue light emitting diode 230 may be arranged in a first row of the matrix pattern, and the second red light emitting diode 212 and the green light emitting diode 220 may be arranged in a second row of the matrix pattern.

Accordingly, the light-emitting distribution of the red light emitting diode 210, the light-emitting distribution of the green light emitting diode 220, and the light-emitting distribution of the blue light emitting diode 230 may overlap as much as possible.

In addition, the white light implementation performance of the light source 200s may be improved.

In addition, a backlight unit 120 for display device capable of improving color separation may be provided.

In addition, a backlight unit 120 for display device capable of expanding a viewing angle may be provided.

In addition, a backlight unit 120 for display device capable of reducing the size of a light source 200s may be provided.

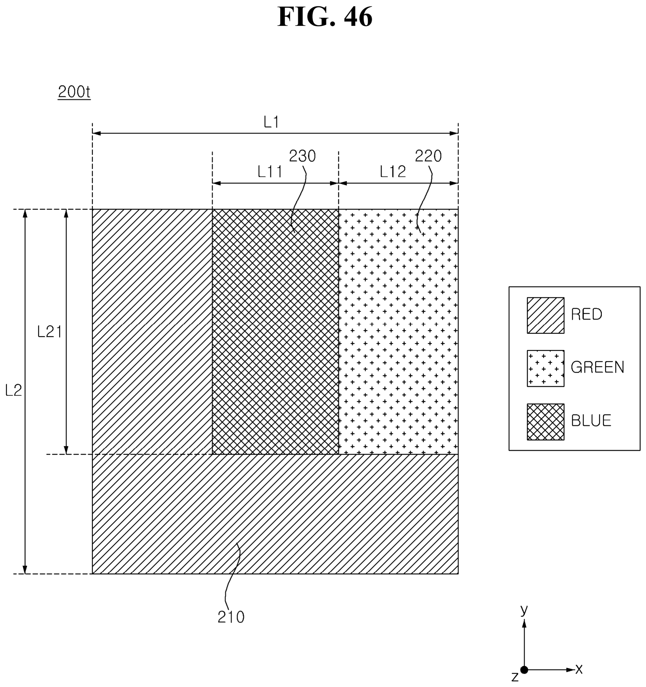

Referring to FIG. 46, a red light emitting diode 210 may surround a portion of the blue light emitting diode 230. The red light emitting diode 210 may surround a portion of the green light emitting diode 220. The red light emitting diode 210 may extend in the length direction of the light source 200t. The red light emitting diode 210 may extend in the width direction of the light source 200t. For example, the red light emitting diode 210 may be bent to extend in the length direction of the light source 200t, and may be extended in the width direction of the light source 200t. The light source 200 may have an 'L' shape.

The lengths L21 of the green and blue light emitting diodes 220, 230 may be shorter than the length of the light source 200t. The lengths L21 of the green and blue light emitting diodes 220, 230 may be substantially the same. In addition, the widths L11, L12 of the green and blue light emitting diodes 220, 230 may be substantially the same. In addition, the light-emitting areas of the green and blue light emitting diodes 220, 230 may be substantially the same. The green and blue light emitting diodes 220, 230 may be arranged continuously with each other. One sides of the green and blue light emitting diodes 220, 230 may overlap with each other in a planar view.

In the width direction of the light source 200t, red, blue, and green light emitting diodes 210, 230, 220 may be arranged sequentially.

The blue light emitting diode 230 may be located between the red light emitting diode 210 and the green light emitting diode 220.

The length L2 of the red light emitting diode 210 may be greater than the lengths L21 of the green and blue light emitting diodes 220, 230.

The width L1 of the red light emitting diode 210 may be greater than the widths L11, L12 of the green and blue light emitting diodes 220, 230.

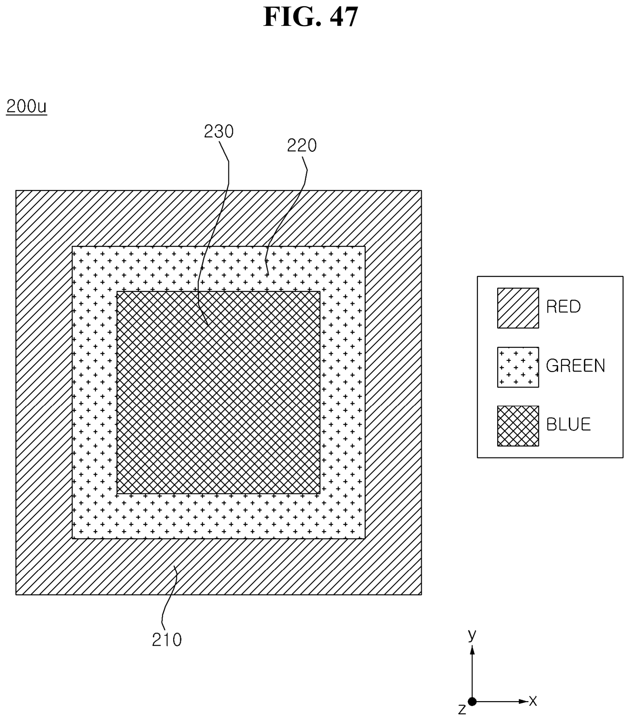

Referring to FIGS. 47 to 49, the red light emitting diode 210 may surround the green and blue light emitting diodes 220, 230. The red light emitting diode 210 may extend along the perimeter of the light source 200. The red light emitting diode 210 may have a ring shape. For example, the red light emitting diode 210 may have a square ring shape or a round ring shape.

Referring to FIG. 47, the red light emitting diode 210 may surround the green light emitting diode 220. The red light emitting diode 210 may have a square ring shape surrounding the green light emitting diode 220. For example, the red light emitting diode 210 may have a substantially square ring shape.

The green light emitting diode 220 may surround the blue light emitting diode 230. The green light emitting diode 220 may have a square ring shape surrounding the blue light emitting diode 230. For example, the green light emitting diode 220 may have a substantially square ring shape.

The blue light emitting diode 230 may be located at the center of the light source 200u. The blue light emitting diode 230 may have a square shape. For example, the blue light emitting diode 230 may have a solid square shape.

Accordingly, the red light emitting diode 210, which has the highest temperature sensitivity, may be spaced furthest apart from the center of the light source 200u where heat is concentrated. Similarly, the green light emitting diode 220, which has temperature sensitivity, may be spaced furthest apart from the center of the light source 200u where heat is concentrated. Accordingly, the performance degradation of the red and green light emitting diodes 210, 220 due to temperature increase may be minimized.

In addition, the blue light emitting diode 230, which has little temperature sensitivity, may be located at the center of the light source 200u where heat can be concentrated.

In addition, heat generated from the red and green light emitting diodes 210, 220 may be smoothly dissipated.

In addition, the white light implementation performance of the light source 200u may be improved.

In addition, the operating temperature of the light source 200u may be lowered.

In addition, a backlight unit 120 for display device capable of improving color expression and/or brightness may be provided.

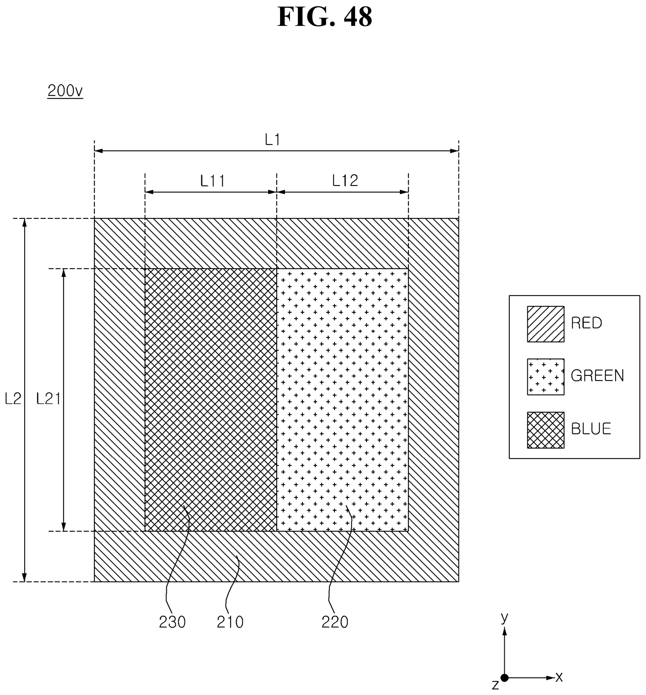

Referring to FIG. 48, in one embodiment, the green and blue light emitting diodes 220, 230 may extend in the length direction of the light source 200. The green and blue light emitting diodes 220, 230 may be arranged continuously in the width direction of the light source 200v. The lengths L21 of the green and blue light emitting diodes 220, 230 may be shorter than the length L2 of the light source 200v. The lengths L21 of the green and blue light emitting diodes 220, 230 may be substantially the same. In addition, the widths L11, L12 of the green and blue light emitting diodes 220, 230 may be substantially the same. In addition, the light-emitting areas of the green and blue light emitting diodes 220, 230 may be substantially the same. The green and blue light emitting diodes 220, 230 may be arranged contiguously. One sides of the green and blue light emitting diodes 220, 230 may overlap with each other in a planar view.

The red light emitting diode 210 may extend along the perimeter of the rectangular shape of the green and blue light emitting diodes 220, 230.

Accordingly, the red light emitting diode 210, which has the highest temperature sensitivity, may be spaced furthest apart from the center of the light source 200v where heat is concentrated. Accordingly, the performance degradation of the red light emitting diode 210 due to temperature increase may be minimized.

In addition, the blue light emitting diode 230, which has little temperature sensitivity, may be disposed at the center of the light source 200v where heat can be concentrated.

In addition, the heat generated by the red light emitting diode 210 may be smoothly dissipated.

In addition, the white light implementation performance of the light source 200v may be improved.

In addition, the operating temperature of the light source 200v may be lowered.

In addition, a backlight unit 120 for display device capable of improving color expression and/or brightness may be provided.

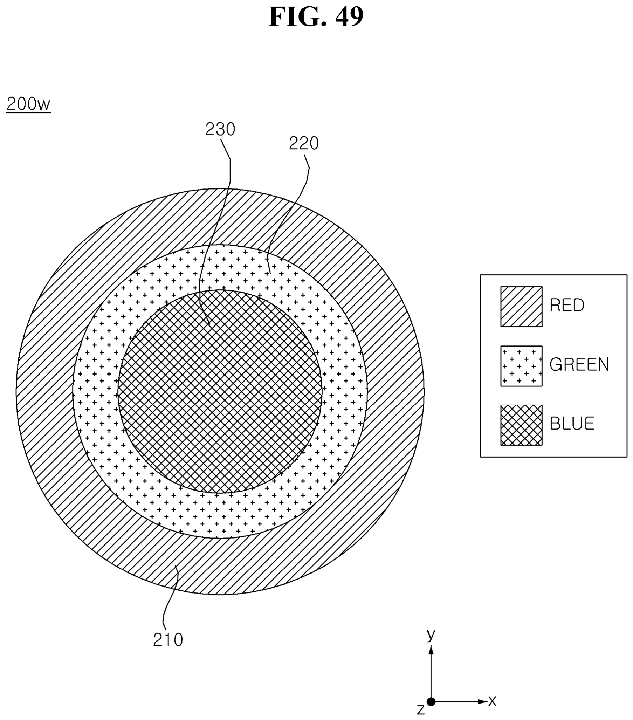

Referring to FIG. 49, the red light emitting diode 210 may surround the green light emitting diode 220. The red light emitting diode 210 may have a circular ring shape surrounding the green light emitting diode 220.

The green light emitting diode 220 may surround the blue light emitting diode 230. The green light emitting diode 220 may have a circular ring shape surrounding the blue light emitting diode 230.

The blue light emitting diode 230 may be located at the center of the light source 200. The blue light emitting diode 230 may have a circular shape. For example, the blue light emitting diode 230 may have a solid circular shape.

Accordingly, the red light emitting diode 210, which has the highest temperature sensitivity, may be spaced furthest apart from the center of the light source 200W where heat is concentrated. Similarly, the green light emitting diode 220, which has the temperature sensitivity, may be spaced apart from the center of the light source 200W where heat is concentrated. Accordingly, performance degradation of the red and green light emitting diodes 210, 220 due to temperature increase may be minimized.

In addition, the blue light emitting diode 230, which has little temperature sensitivity, may be disposed at the center of the light source 200w where heat can be concentrated.

In addition, heat generated from the red and green light emitting diodes 210, 220 may be smoothly dissipated.

In addition, the white light implementation performance of the light source 200w may be improved.

In addition, the operating temperature of the light source 200w may be lowered.

In addition, a backlight unit 120 for display device capable of improving color expression and/or brightness may be provided.

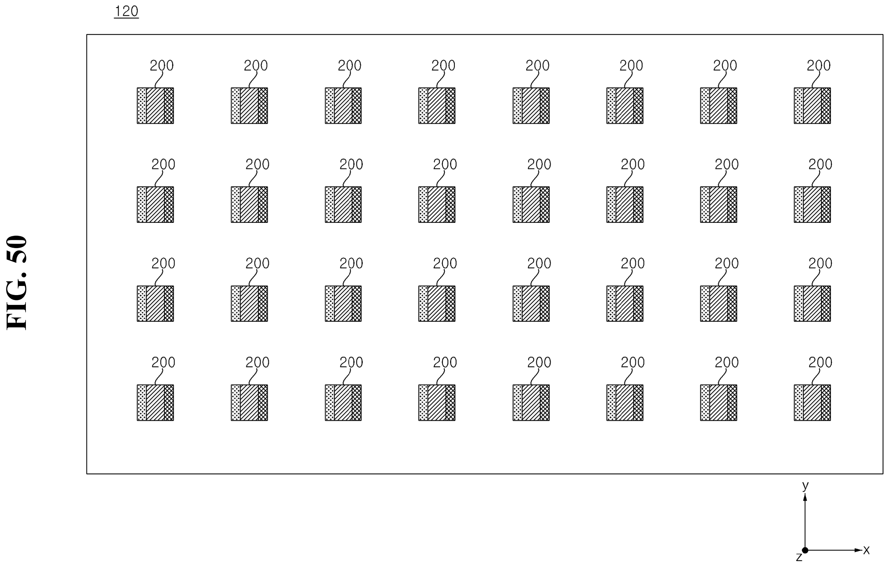

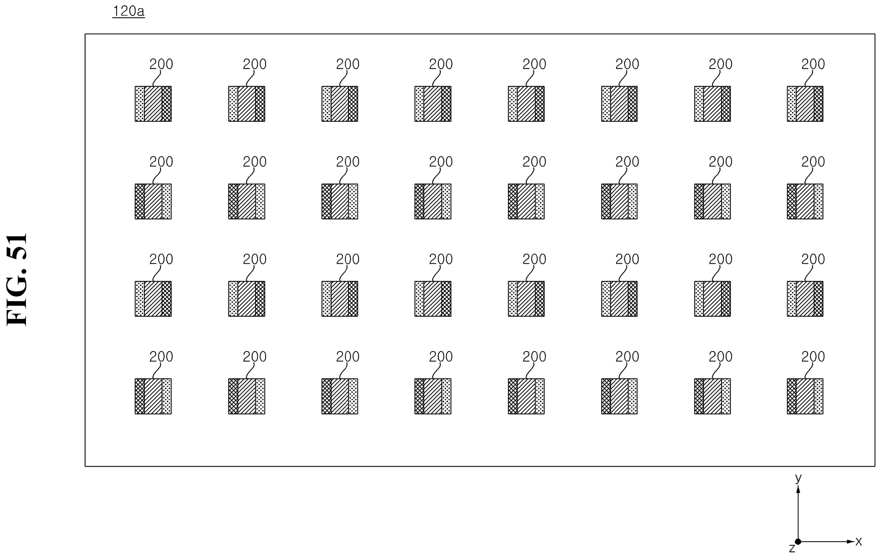

Referring to FIGS. 50 and 51 together with FIG. 14, a plurality of light sources 200 may be arranged in a matrix pattern. The matrix pattern may include a plurality of rows and a plurality of columns. For example, the plurality of light sources 200 may be spaced apart from each other and arranged in a 4x8 matrix pattern. The row-wise gap and column-wise gap between the light sources 200 may be substantially the same.

The row direction of the matrix pattern may be parallel to the long side direction of the display device 100. The column direction of the matrix pattern may be parallel to the short side direction of the display device 100. The number of columns may be greater than the number of rows. However, it is not limited thereto, and the number of columns may be same to the number of rows.

Each of the light sources 200 light emitting diodes 210, 220, 230 may be arranged in the row direction or the column direction of the matrix pattern. For example, the green, red, and blue light emitting diodes 220, 210, 230 may be arranged in the row direction of the matrix pattern.

In one embodiment, the light sources 200 located in the same row may be arranged in the same direction. For example, the light emitting diodes of the light sources 200 located in the first row may be arranged in the order of green, red, and blue light emitting diodes 220, 210, 230 in the row direction. This may be referred to as a regular arrangement.

In the next row of the regular arrangement, the light sources 200 may be arranged in a reversed manner. For example, the light emitting diodes of the light sources 200 located in a second row may be arranged in the order of blue, red, and green light emitting diodes 210, 220 in the row direction. This may be referred to as a reverse arrangement.

The reverse arrangement may be reversed in the row direction of the matrix pattern with respect to the regular arrangement. For example, the reverse arrangement may be reversed left and right with respect to the regular arrangement. The light sources 200 may be arranged alternately in the regular and reverse arrangements. For example, the light sources 200 may be arranged alternately in the regular and reverse arrangements in each row. For example, each of the light sources 200 arranged in odd rows may be arranged in the regular direction, and each of the light sources 200 arranged in even rows may be arranged in the reverse direction.

Accordingly, the light-emitting distribution of the red light emitting diode 210, the light-emitting distribution of the green light emitting diode 220, and the light-emitting distribution of the blue light emitting diode 230 may overlap as much as possible.

In addition, a backlight unit 120a for display device capable of improving color separation may be provided.

In addition, a backlight unit 120a for display device capable of improving white light implementation performance may be provided.

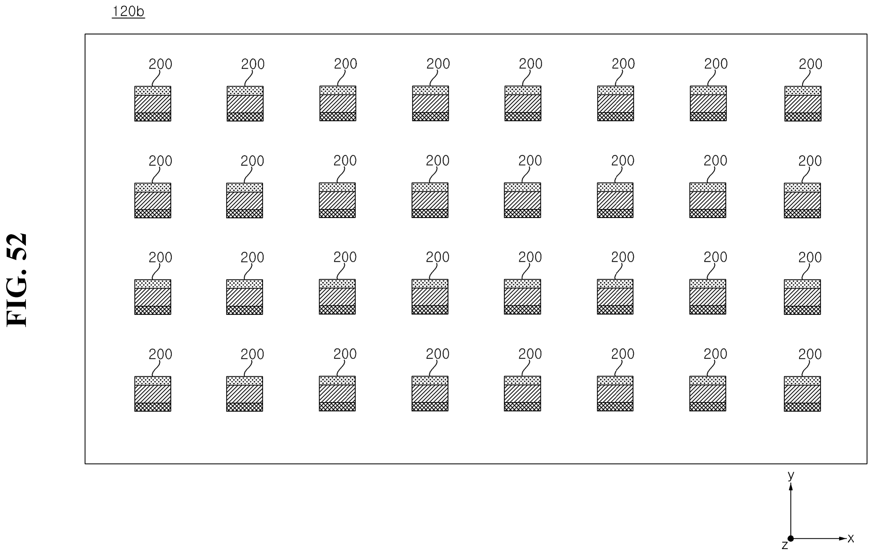

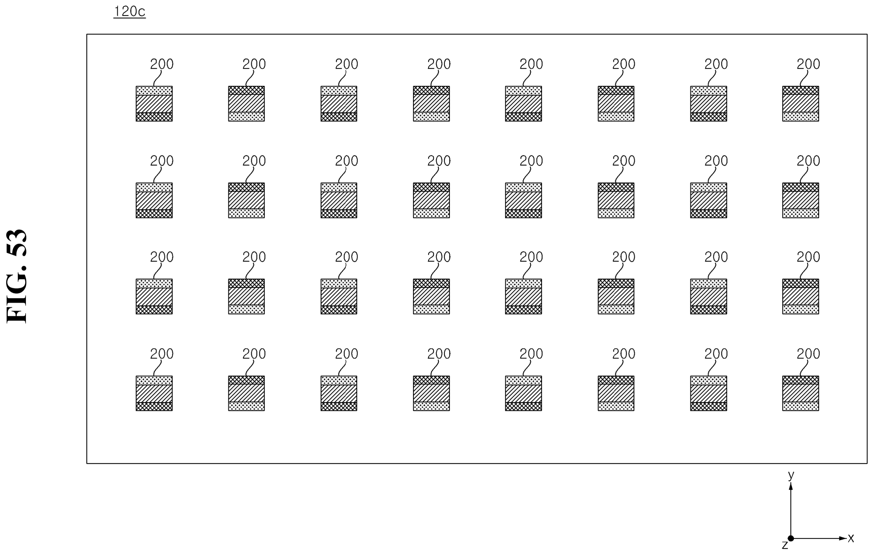

Referring to FIGS. 52 and 53, in one embodiment, light sources 200 located in the same column may be arranged in the same direction. For example, the light emitting diodes of the light sources 200 located in the first column may be arranged in the order of green, red, and blue light emitting diodes 220, 210, 230 in the column direction. This may be referred to as a regular arrangement.

In the next column of the regular-arranged column, the light sources 200 may be arranged in an inverted manner. For example, the light emitting diodes of the light sources 200 located in the second row may be arranged in the order of blue, red, and green light emitting diodes 210, 220 in the column direction. This may be referred to as a reverse arrangement.

The reverse arrangement may be reversed in the column direction of the matrix pattern with respect to the regular arrangement. For example, the reverse arrangement may be upside down with respect to the regular arrangement.

The light sources 200 may be alternately arranged in the normal and reverse arrangements. For example, the light sources 200 may be alternately arranged in the normal and reverse arrangements in each column. For example, each of the light sources 200 arranged in odd columns may be arranged in the regular direction, and each of the light sources 200 arranged in even columns may be arranged in the reverse direction.

Accordingly, the light-emitting distribution of the red light emitting diode 210, the light-emitting distribution of the green light emitting diode 220, and the light-emitting distribution of the blue light emitting diode 230 may overlap as much as possible.

In addition, a backlight unit 120c for display device capable of improving color separation may be provided.

In addition, a backlight unit 120a for display device capable of improving white light implementation performance may be provided.

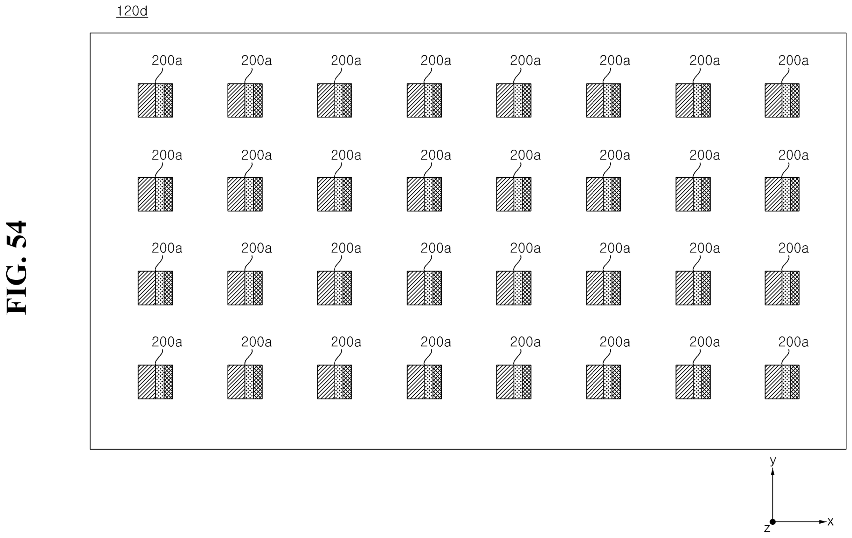

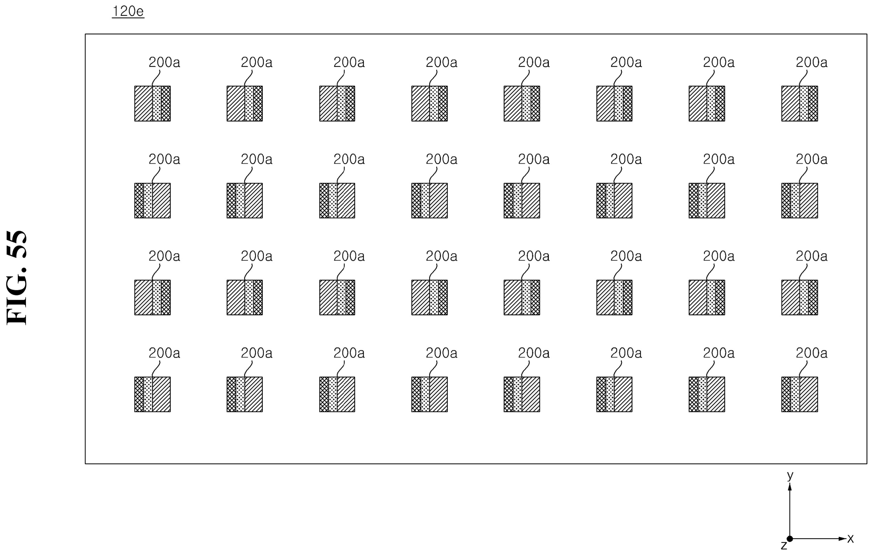

Referring to FIGS. 54 and 55, in one embodiment, light sources 200a located in the same row may be arranged in the same direction. For example, the light emitting diodes of the light sources 200a located in a first row may be arranged in the order of red, green, and blue light emitting diodes 210, 220, 230 in the row direction. This may be referred to as a regular arrangement.

In the next row of the regularly arranged row, the light sources 200a may be arranged in an inverted manner. For example, the light emitting diodes of the light sources 200a located in the second row may be arranged in the order of blue, green, and red light emitting diodes 230, 220, 210 in the row direction. This may be referred to as a reverse arrangement.

The reverse arrangement may be reversed in the row direction of the matrix pattern with respect to the regular arrangement. For example, the reverse arrangement may be reversed left and right with respect to the regular arrangement.

The light sources 200a may be alternately arranged in the regular and reverse arrangements. For example, the light sources 200a may be alternately arranged in the regular and reverse arrangements in each row. For example, each of the light sources 200a arranged in odd rows may be arranged in the regular direction, and each of the light sources 200a arranged in even rows may be arranged in the reverse direction.

Accordingly, the light-emitting distribution of the red light emitting diode 210, the light-emitting distribution of the green light emitting diode 220, and the light-emitting distribution of the blue light emitting diode 230 may overlap as much as possible.

In addition, a backlight unit 120e for display device capable of improving color separation may be provided.

In addition, a backlight unit 120e for display device capable of improving white light implementation performance may be provided.

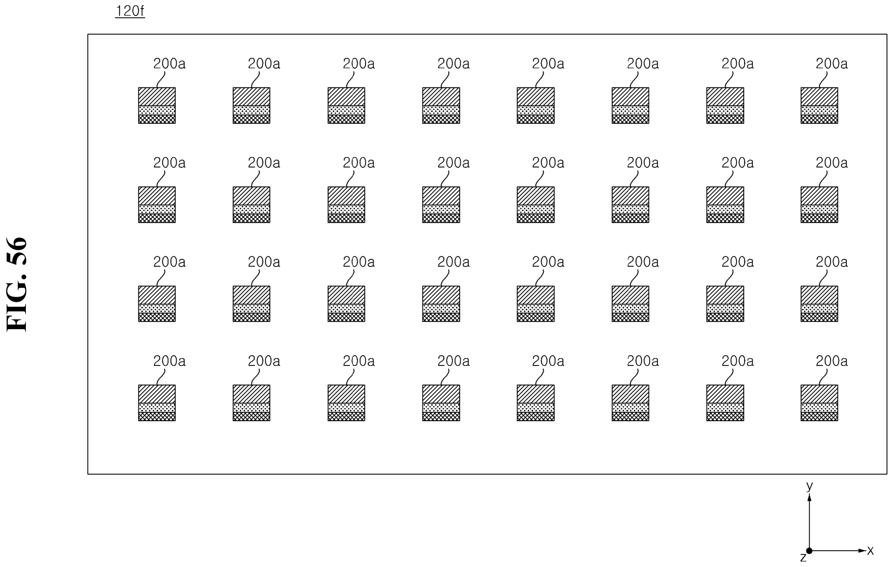

Referring to FIG. 56, the arrangement direction of each of the red, green, and blue light emitting diodes 210, 220, 230 of the light sources 200a may intersect with the row direction of the matrix pattern. For example, each of the red, green, and blue light emitting diodes 210, 220, 230 of the light sources 200a may be arranged in the column direction of the matrix pattern.

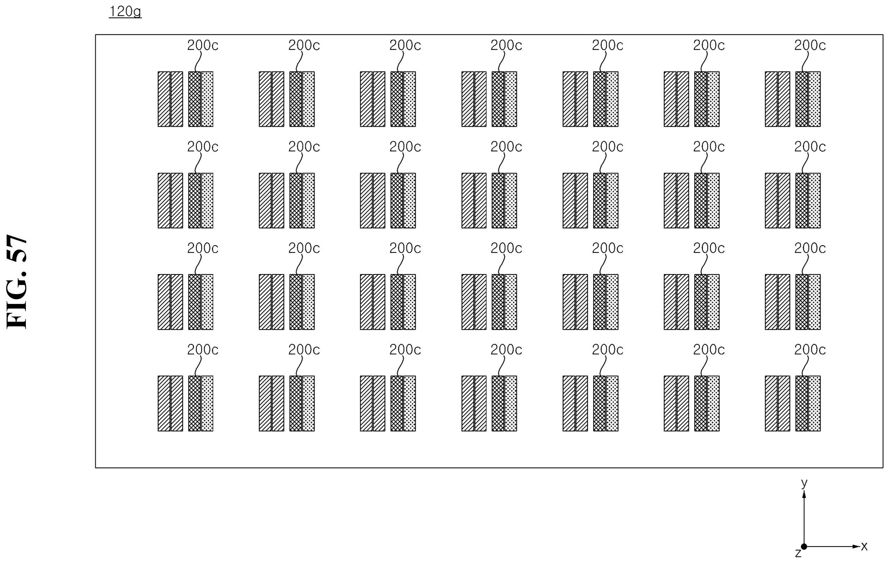

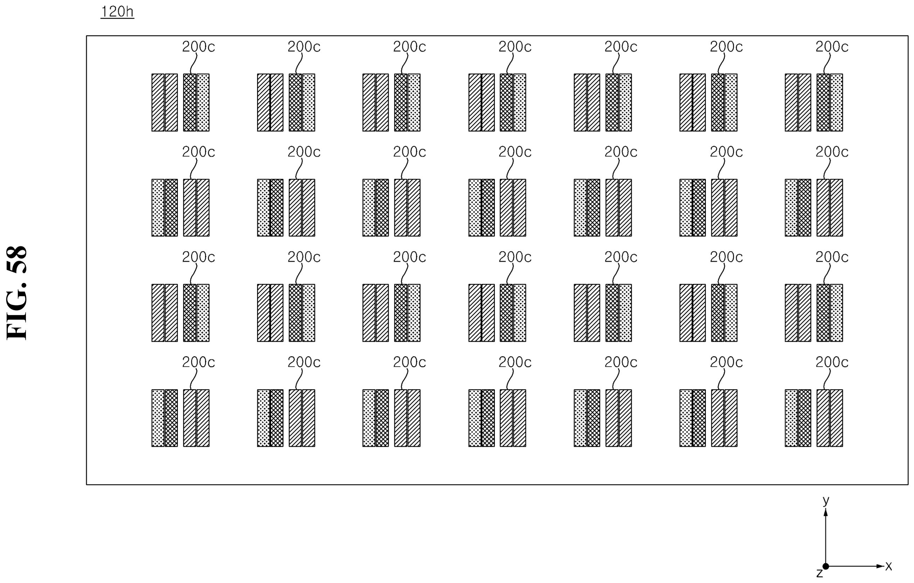

Referring to FIGS. 57 and 58, in one embodiment, light sources 200c located in the same row may be arranged in the same direction. For example, the light emitting diodes of the light sources 200c located in a first row may be arranged in the row direction in the order of first and second red light emitting diodes 211, 212, green and blue light emitting diodes 220, 230. This may be referred to as a regular arrangement.

In the next row of the regularly arranged row, the light sources 200c may be arranged in an inverted manner. For example, the light emitting diodes of the light sources 200c located in the second row may be arranged in the row direction in the order of blue and green light emitting diodes 230, 220, and first and second red light emitting diodes 211, 212. This may be referred to as a reverse arrangement.

The reverse arrangement may be reversed in the row direction of the matrix pattern with respect to the regular arrangement. For example, the reverse arrangement may be reversed left and right with respect to the regular arrangement.

The light sources 200c may be alternately arranged in the regular and reverse arrangements. For example, the light sources 200c may be alternately arranged in the regular and reverse arrangements in each row. For example, each of the light sources 200c arranged in odd rows may be arranged in the regular direction, and each of the light sources 200c arranged in even rows may be arranged in the reverse direction.

Accordingly, the light-emitting distribution of the red light emitting diode 210, the light-emitting distribution of the green light emitting diode 220, and the light-emitting distribution of the blue light emitting diode 230 may overlap as much as possible.

In addition, a backlight unit 120h for display device capable of improving color separation may be provided.

In addition, a backlight unit 120h for display device capable of improving white light implementation performance may be provided.

Referring to FIGS. 1 to 58, a backlight unit 120 for display device includes a plurality of light sources arranged in a matrix pattern, in which each of the light sources 200 includes a red light emitting diode 210, a green light emitting diode 220, and a blue light emitting diode 230.

The backlight unit 120 for display device further includes a diffuser plate 129 configured to receive light from the light sources 200.

The backlight unit 120 for display device further includes at least one optical sheet 125 between a display panel 110 and the diffuser plate 129.

A light-emitting area of the red light emitting diode 210 is larger than a light-emitting area of the green light emitting diode 220 and a light-emitting area of the blue light emitting diode 230.

An arrangement of the red, green, and blue light emitting diodes 210, 220, 230 substantially forms a perimeter of a square in a planar view.

The red, green, and blue light emitting diodes 210, 220, 230 are elongated.

Lengths of the red, green, and blue light emitting diodes 210, 220, 230 are substantially the same to one another.

The light-emitting area of the red light emitting diode 210 is larger than or equal to about 1.4 times the light-emitting area of the green light emitting diode 220 or the light-emitting area of the blue light emitting diode 230.

The light-emitting area of the red light emitting diode 210 is larger than or equal to about 2.0 times the light-emitting area of the green light emitting diode 220 or the light-emitting area of the blue light emitting diode 230.

The light-emitting area of the green light emitting diode 220 is substantially same to the light-emitting area of the blue light emitting diode 230.

The red, green, and blue light emitting diodes 210, 220, 230 are spaced apart from each other in a width direction intersecting with a length direction.

The gap between the red, green, and blue light-emitting diodes 210, 220, 230 may be less than about 100 micrometers.

Light-emitting surfaces of the red, green, and blue light emitting diodes 210, 220, 230 form a single light-emitting surface.

The red light emitting diode 210 may be provided between the green and blue light emitting diodes 220, 230.

The red light emitting diode 210 is located at an edge of the arrangement.

The red, green, and blue light-emitting diodes 210, 220, 230 may be arranged in the order of red light-emitting diode 210, blue light-emitting diode 230, and green light-emitting diode 220.

The red light-emitting diode 210 may include first and second red light-emitting diodes 211, 212 which have light-emitting areas that are substantially same to each other, and are elongated.

The first and second red light-emitting diodes 211, 212 may be arranged continuously.

The first and second red light-emitting diodes 211, 212 may be spaced apart from each other in a width direction intersecting with the length direction.

The distance between the first and second red light-emitting diodes 211, 212 may be smaller than the distance between the red light-emitting diode 210 and the green light-emitting diode 220, or the distance between the red light-emitting diode 210 and the blue light-emitting diode 230.

At least one of the green or blue light-emitting diodes 220, 230 may be provided between the first and second red light-emitting diodes 211, 212.

The green light-emitting diode 220 may include first and second green light-emitting diodes 221, 222 which have light-emitting areas that are substantially same to each other, and are elongated.

The first and second green light-emitting diodes 221, 222 may be provided between the first and second red light-emitting diodes 211, 212.

The blue light-emitting diode 230 may be provided between the first and second green light-emitting diodes 221, 222.

The red light-emitting diode 210 may include first to fourth red light-emitting diodes 211, 212, 213, 214 which have light-emitting areas that are substantially same to each other, and are elongated.

The green light-emitting diode 220 may include first and second green light-emitting diodes 221, 222 which have light-emitting areas that are substantially same to each other, and are elongated.

The blue light-emitting diode 230 may include first and second blue light-emitting diodes 231, 232 which have light-emitting areas that are substantially same to each other, and are elongated.

The blue and green light-emitting diodes 230, 220 may have substantially square light-emitting areas.

The red light-emitting diode 210 may include first and second red light-emitting diodes 211, 212 that are substantially same and have substantially square light-emitting areas.

The first and second red light-emitting diodes 211, 212, the green light-emitting diode 220, and the blue light-emitting diode 230 may be arranged in a 2x2 matrix pattern.

The red light-emitting diode 210 may surround at least a portion of the perimeter of the blue light-emitting diode 230 and at least a portion of the perimeter of the green light-emitting diode 220.

The red light-emitting diode 210 may have a ring shape surrounding the green light-emitting diode 220 and the blue light-emitting diode 230.

The green light-emitting diode 220 may have a ring shape surrounding the blue light-emitting diode 230.

The ring shape may include a rectangular ring shape.

The red, green, and blue light-emitting diodes 210, 220, 230 may be arranged in the row direction of the matrix pattern in any order.

Each of the light sources 200 arranged in the odd rows may be inverted in the row direction with respect to each of the light sources 200 arranged in the even rows.

The backlight unit 120 for the display device may further include: a substrate 122 on which the light sources 200 are mounted; a first electrode pad 251 that is provided between the substrate 122 and the red light-emitting diode 210, and electrically connects the red light-emitting diode 210 and the substrate 122; a second electrode pad 252 that is provided between the substrate 122 and the green light-emitting diode 220, and electrically connects the green light-emitting diode 220 and the substrate 122; and a third electrode pad 253 that is provided between the substrate 122 and the blue light-emitting diode 230, and electrically connects the blue light-emitting diode 230 and the substrate 122.

The red light-emitting diode 210 may completely cover the first electrode pad 251.

The green light-emitting diode 220 may completely cover the second electrode pad 252.

The blue light-emitting diode 230 may completely cover the third electrode pad 253.

Referring to FIGS. 1 to 58, a backlight unit 120 for display device may include: a plurality of light sources 200 arranged in a matrix pattern, each of the light sources 200 including a red light-emitting diode 210, a green light-emitting diode 220, and a blue light-emitting diode 230; a diffuser plate 129 configured to receive light from the light sources 200; and at least one optical sheet 125 between a display panel 110 and the diffuser plate 129.

The light-emitting area of the red light-emitting diode 210 may be greater than the light-emitting area of the green light-emitting diode 220 and the light-emitting area of the blue light-emitting diode 230. The light source 200 may emit white light.

The current density of the red light-emitting diode 210 may be less than or equal to the current densities of the green and blue light-emitting diodes 220, 230.

The current density of the red light-emitting diode 210 may correspond to about 60% to about 100% of the current density of the blue light-emitting diode 230.

The current applied to the red light-emitting diode 210 may be greater than the currents applied to the green or blue light-emitting diode 230.

The current applied to the red light-emitting diode 210 may be about 1.5 times greater than the currents applied to the blue light-emitting diode 230.

The current density of the blue light-emitting diode 230 may be less than the current density of the green light-emitting diode 220.

The current applied to the green light-emitting diode 220 may be greater than the current applied to the blue light-emitting diode 230.

The light-emitting area of the green light-emitting diode 220 may be substantially the same as the light-emitting area of the blue light-emitting diode 230.

The current density of the green light-emitting diode 220 may be about 1.4 times greater than the current density of the blue light-emitting diode 230.

The arrangement of the red, green, and blue light-emitting diodes 210, 220, 230 may form a perimeter of a rectangle in a planar view.

The length of the arrangement of the red, green, and blue light-emitting diodes 210, 220, 230 may be about 0.75 to about 1.25 times the width of the arrangement of the red, green, and blue light-emitting diodes 210, 220, 230.

The lengths of the red, green, and blue light-emitting diodes 210, 220, 230 may be substantially same to each other.

The light-emitting area of the red light-emitting diode 210 may be greater than about 2.0 times the light-emitting area of the green light-emitting diode 220 or the light-emitting area of the blue light-emitting diode 230.

The light source 200 may operate within a temperature range of about 45 degrees Celsius to about 65 degrees Celsius.

Referring to FIGS. 1 to 58, a backlight unit 120 for display device includes: a plurality of light sources 200 arranged in a matrix pattern, each of the light sources 200 including a red light-emitting diode 210, a green light-emitting diode 220, and a blue light-emitting diode 230; a diffuser plate 129 configured to receive light from the light sources 200; and at least one optical sheet 125 between the display panel 110 and the diffuser plate 129, in which the light emitting area of the red light emitting diode 210 may be larger than the light emitting area of the green light emitting diode 220 and the light emitting area of the blue light emitting diode 230.

The operating temperature of the light source 200 may be less than or equal to about 50 degrees Celsius.

The current applied to the red light emitting diode 210 may be greater than or equal to about 1.5 times the current applied to the blue light emitting diode 230.

The current applied to the green light emitting diode 220 may be greater than or equal to about 1.3 times the current applied to the blue light emitting diode 230.

The light efficiency of the red light emitting diode 210 may be greater than about 60 percent (%) of the maximum light efficiency of the red light emitting diode 210.

The brightness of the red light emitting diode 210 may be greater than or equal to about 85 percent (%) of the maximum brightness.

The effects of a backlight unit for a display device according to the present disclosure are described as follows.

According to at least one of the embodiments of the present disclosure, there is provided a backlight unit for a display device capable of improving image quality.

According to at least one of the embodiments of the present disclosure, there is provided a backlight unit for a display device capable of improving color expression.

According to at least one of the embodiments of the present disclosure, there is provided a backlight unit for a display device capable of improving brightness.

According to at least one of the embodiments of the present disclosure, there is provided a backlight unit for a display device capable of expanding a viewing angle.

According to at least one of the embodiments of the present disclosure, there is provided a backlight unit for a display device capable of improving the implementation performance of white light.

According to at least one of the embodiments of the present disclosure, there is provided a backlight unit for a display device including a red light emitting diode, a green light emitting diode, and a blue light emitting diode.

According to at least one of the embodiments of the present disclosure, there is provided a backlight unit for a display device capable of improving color separation.

According to at least one of the embodiments of the present disclosure, there is provided a backlight unit for a display device capable of reducing the size of a light source.

According to at least one of the embodiments of the present disclosure, there is provided a backlight unit for a display device capable of reducing the operating temperature of a light source.

According to at least one of the embodiments of the present disclosure, there is provided a backlight unit for a display device capable of reducing manufacturing costs.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A backlight unit (120) for a display device (100), comprising:
a substrate (122);
a plurality of light sources (200) arranged in a matrix pattern on the substrate (122),
each of the light sources (200) including a red light emitting diode (210), a green light emitting diode (220), and a blue light emitting diode (230);
a diffuser plate (129) configured to receive light from the light sources (200); and
at least one optical sheet (125) disposed between a display panel (110) and the diffuser plate (129),
**characterized in that** a light-emitting area of the red light emitting diode (210) is larger than a light-emitting area of the green light emitting diode (220) and a light-emitting area of the blue light emitting diode (230) to compensate for efficiency droop of the red light emitting diode (210).

2. The backlight unit (120) according to claim 1,
wherein the red, green, and blue light emitting diodes (210, 220, 230) are clustered together to define a combined light-emitting surface, and
wherein an aspect ratio of the combined light-emitting surface, defined as a ratio of a total width to a total length, is in a range of 0.75 to 1.25.

3. The backlight unit (120) according to claim 1 or 2,
wherein the light-emitting area of the red light emitting diode (210) is larger than or equal to 1.4 times, preferably larger than or equal to 2.0 times, the light-emitting area of the green light emitting diode (220) or the light-emitting area of the blue light emitting diode (230).

4. The backlight unit (120) according to any one of the preceding claims,
wherein the red, green, and blue light emitting diodes (210, 220, 230) are elongated, and lengths of the red, green, and blue light emitting diodes (210, 220, 230) are substantially equal to one another.

5. The backlight unit (120) according to any one of the preceding claims,
further comprising:
a first electrode pad (251) disposed between the red light emitting diode (210) and the substrate (122);
a second electrode pad (252) disposed between the green light emitting diode (220) and the substrate (122); and
a third electrode pad (253) disposed between the blue light emitting diode (230) and the substrate (122),
wherein the red light emitting diode (210) completely covers the first electrode pad (251) in a planar view.

6. The backlight unit (120) according to claim 5,
wherein the first electrode pad (251) comprises a pair of pads (251a, 251b) spaced apart from each other by a distance of 100 micrometers or more.

7. The backlight unit (120) according to any one of the preceding claims,
wherein the red light emitting diode (210) comprises a first red LED (211) and a second red LED (212) spaced apart from each other, and
wherein at least one of the green light emitting diode (220) and the blue light emitting diode (230) is disposed between the first red LED (211) and the second red LED (212).

8. The backlight unit (120) according to claim 2,
wherein the red light emitting diode (210) is located at an edge of the combined light-emitting surface, or surrounds at least a portion of the green light emitting diode (220) and the blue light emitting diode (230).

9. The backlight unit (120) according to any one of the preceding claims,
wherein the light sources (200) are configured such that a current density of the red light emitting diode (210) is lower than a current density of the blue light emitting diode (230) during operation.

10. A display device (100) comprising:
a display panel (110); and
the backlight unit (120) according to any one of claims 1 to 9 configured to provide light to the display panel (110).
